# EUROPEAN PATENT APPLICATION

(11) **EP 4 744 757 A1**
(43) Date of publication of application: **20.05.2026**
(21) Application number: 24897080.8
(22) Date of filing: 02.10.2024
(51) Int. Cl.: B01D 53/14, B01D 53/18, B01D 53/62, B01D 53/78, C01B 32/50

(54) **ABSORPTION TOWER CONFIGURATION FOR CARBON DIOXIDE RECOVERY SYSTEM, CARBON DIOXIDE ABSORPTION METHOD**

(30) Priority: 30.11.2023 JP 2023202557
(71) Applicant: Mitsubishi Heavy Industries, Ltd., Tokyo 100-8332 (JP)
(72) Inventor: MATSUO, Takeshi, Tokyo 100-8332 (JP); NAGAYASU, Hiromitsu, Tokyo 100-8332 (JP); AKIYAMA, Tomoh, Tokyo 100-8332 (JP); NATSUYAMA, Seiji, Takasago City, Hyogo 6768686 (JP); HIGASHINO, Koji, Tokyo 100-8332 (JP)
(74) Representative: Studio Torta S.p.A.
(86) International application number: PCT/JP2024/035243
(87) International publication number: WO 2025/115390

(57) **Abstract**

An absorption tower according to the present invention comprises: a carbon dioxide absorption part that brings a gas to be processed that includes carbon dioxide into contact with an absorption liquid; and a washing part that brings a decarbonated gas that has contacted the absorption liquid at the carbon dioxide absorption part into contact with washing water. The carbon dioxide absorption part has an absorption unit and absorbs the carbon dioxide from the gas to be processed. The washing part has a recovery unit and recovers an absorption liquid component entrained in the decarbonated gas. At least one of the absorption unit and the recovery unit includes a storage part that stores a liquid and an aeration part that sprays a gas into the liquid stored at the storage part.

## Description

### Technical Field

The present disclosure relates to an absorption tower configuration for a carbon dioxide recovery system and a carbon dioxide absorption method.

Priority is claimed on Japanese Patent Application No. 2023-202557, filed November 30, 2023, the content of which is incorporated herein by reference.

### Background Art

In recent years, from a viewpoint of carbon neutrality, attention has been focused on a concentration of carbon dioxide (CO₂) contained in atmosphere. From a viewpoint of reducing the concentration of the carbon dioxide in the atmosphere, a carbon dioxide recovery system that recovers carbon dioxide from an exhaust gas is known. For example, in a carbon dioxide recovery system using a chemical absorption method, an absorption liquid is circulated between a regeneration tower and an absorption tower to recover carbon dioxide from an exhaust gas.

For example, PTL 1 discloses a decarbonation process of removing carbon dioxide from a combustion exhaust gas, which is a gas containing carbon dioxide, using an amine compound-containing absorption liquid. In this decarbonation process, the carbon dioxide in the combustion exhaust gas is removed by bringing the combustion exhaust gas into contact with the absorption liquid in an absorption tower. The absorption tower includes a carbon dioxide absorption part and a washing part. In the carbon dioxide absorption part, the absorption liquid and the combustion exhaust gas are brought into contact with each other. As a result, the carbon dioxide in the combustion exhaust gas is absorbed and removed by the absorption liquid. A loaded absorption liquid that has absorbed the carbon dioxide is sent to a regeneration tower and is regenerated, and is returned to the absorption tower again. In addition, the combustion exhaust gas (decarbonated exhaust gas) that has been decarbonated in the carbon dioxide absorption part is sent to the washing part. In the washing part, a temperature of the decarbonated exhaust gas is lowered by discharging washing water from a nozzle into a space through which the decarbonated exhaust gas flows to bring the washing water into countercurrent contact with the decarbonated exhaust gas. As a result, water vapor entrained in the decarbonated exhaust gas is condensed, and an amine compound that is an absorption liquid entrained in the decarbonated exhaust gas is recovered. In particular, the washing part has a two-stage configuration of a first-stage washing part and a second-stage washing part, so that the amine compound entrained in the decarbonated exhaust gas can be efficiently recovered.

### Citation List

### Patent Literature

[PTL 1] Japanese Unexamined Patent Application Publication No. 2002-126439

### Summary of Invention

### Technical Problem

In the carbon dioxide recovery system such as the decarbonation process described above, in the washing part, the washing water is supplied to the gas from an upper portion through the nozzle. In such a configuration, a height of the absorption tower is likely to be high. In particular, in a case where the washing part is multistage as in PTL 1, the height of the absorption tower causes complicated assembly work at an installation location and difficulty in securing a work location. Therefore, a structure is desired that can suppress the height of the absorption tower while maintaining recovery efficiency of the carbon dioxide from the gas and recovery efficiency of the absorption liquid contained in the gas after the carbon dioxide has been recovered.

The present disclosure describes an absorption tower, a carbon dioxide recovery system, and a carbon dioxide absorption method that can suppress a height while maintaining recovery efficiency of carbon dioxide from a gas and recovery efficiency of an absorption liquid component contained in the gas after the carbon dioxide has been recovered.

### Solution to Problem

An absorption tower according to the present disclosure includes a carbon dioxide absorption part that brings a gas to be processed containing carbon dioxide into contact with an absorption liquid to absorb the carbon dioxide into the absorption liquid, and a washing part that brings a decarbonated gas after contact with the absorption liquid at the carbon dioxide absorption part into contact with washing water to recover an absorption liquid component entrained in the decarbonated gas, in which the carbon dioxide absorption part has an absorption unit and causes the absorption unit to absorb the carbon dioxide from the gas to be processed, the washing part has a recovery unit and causes the recovery unit to recover the absorption liquid component entrained in the decarbonated gas, and at least a part of the absorption unit and the recovery unit has a storage part that stores a liquid and an aeration part that sprays a gas into the liquid stored in the storage part.

In addition, a carbon dioxide recovery system according to the present disclosure includes the absorption tower, which brings the gas to be processed containing the carbon dioxide into contact with the absorption liquid and discharges the absorption liquid having absorbed the carbon dioxide and the decarbonated gas from which the carbon dioxide has been removed, and a regeneration tower that desorbs the carbon dioxide from the absorption liquid discharged from the absorption tower and discharges the absorption liquid from which the carbon dioxide has been desorbed and a regeneration tower discharge gas containing the carbon dioxide.

In addition, a carbon dioxide absorption method according to the present disclosure includes a carbon dioxide absorption step of bringing a gas to be processed containing carbon dioxide into contact with an absorption liquid to absorb the carbon dioxide into the absorption liquid, and a washing step of bringing a decarbonated gas after contact with the absorption liquid in the carbon dioxide absorption step into contact with washing water to recover an absorption liquid component entrained in the decarbonated gas, in which at least a part of the carbon dioxide absorption step and the washing step includes a step of spraying a gas into a stored liquid to generate a froth flow, and a step of sending a part of the stored liquid to a lower side in a vertical direction and extracting a gas contained in the liquid to send the gas to an upper side in the vertical direction.

### Advantageous Effects of Invention

According to the present disclosure, it is possible to suppress the height of the absorption tower while maintaining the recovery efficiency of the carbon dioxide from the gas and recovery efficiency of the absorption liquid contained in the gas after the carbon dioxide has been recovered.

### Brief Description of Drawings

FIG. 1 is a schematic diagram showing a carbon dioxide recovery system according to the present embodiment.
FIG. 2 is a schematic diagram showing an absorption tower according to a first embodiment.
FIG. 3 is a schematic diagram showing an absorption unit (recovery unit) according to the first embodiment.
FIG. 4 is a cross-sectional view taken along a line IV-IV in FIG. 3 and showing a gas to be processed aeration part (decarbonated gas aeration part).
FIG. 5 is a schematic diagram showing an absorption tower according to a second embodiment.
FIG. 6 is a cross-sectional view taken along line VI-VI in FIG. 5 and showing a partition plate.

### Description of Embodiments

Hereinafter, a form for implementing an absorption tower and a carbon dioxide recovery system according to the present disclosure will be described with reference to the accompanying drawings. However, the present disclosure is not limited to the embodiment only.

### <First Embodiment>

### (Carbon Dioxide Recovery System)

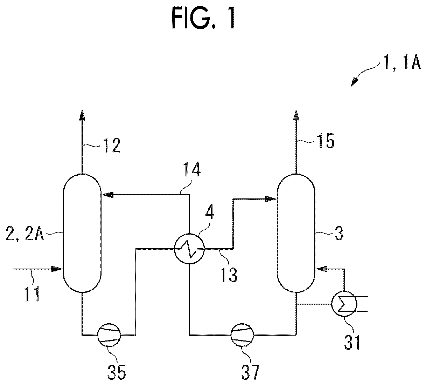

A carbon dioxide recovery system 1 can recover carbon dioxide (CO₂) from a gas to be processed from an exhaust gas generation source (not shown). Examples of the exhaust gas generation source include a boiler, an incinerator, a gas turbine, and a manufacturing plant of sustainable aviation fuel (SAF) or ethanol. That is, examples of the gas to be processed include an exhaust gas containing carbon dioxide to be finally discharged and a process gas containing carbon dioxide used in the middle of various plants. As shown in FIG. 1, the gas to be processed supplied from the exhaust gas generation source is sent to the carbon dioxide recovery system 1.

The carbon dioxide recovery system 1 according to the present embodiment includes an absorption tower 2, a gas to be processed line 11, a regeneration tower 3, a rich line 13, a lean line 14, an absorption liquid heat exchanger 4, and a regeneration tower discharge line 15.

The gas to be processed containing carbon dioxide is introduced into the absorption tower 2. The absorption tower 2 brings the gas to be processed into contact with the absorption liquid to remove carbon dioxide from the gas to be processed. Examples of the absorption liquid include an amine-based solution. Specifically, as the absorption liquid, for example, alkanolamines such as monoethanolamine (MEA), diethanolamine (DEA), triethanolamine (TEA), methyldiethanolamine (MDEA), diisopropanolamine (DIPA), and diglycolamine (DGA) can be adopted. Additionally, hindered amines can also be adopted. Additionally, each of these single aqueous solutions or mixed aqueous solutions of two or more of these can also be adopted. The absorption tower 2 separately discharges the absorption liquid having absorbed carbon dioxide and an absorption tower discharge gas containing the gas to be processed from which the carbon dioxide has been removed. A detailed configuration of the absorption tower 2 will be described later.

The gas to be processed line 11 introduces the gas to be processed into the absorption tower 2. The gas to be processed line 11 sends the gas to be processed sent from the exhaust gas generation source to the absorption tower 2 after cooling the gas to be processed with a cooling device (not shown). The gas to be processed line 11 is connected to the absorption tower 2.

An absorption tower discharge line 12 is connected to a top portion of the absorption tower 2, and discharges the absorption tower discharge gas discharged from the absorption tower 2 to the outside.

The regeneration tower 3 desorbs carbon dioxide from the absorption liquid discharged from the absorption tower 2. The regeneration tower 3 heats the absorption liquid by a reboiler 31. As a result, in the regeneration tower 3, most of the carbon dioxide is desorbed from the absorption liquid together with the vapor to separate the carbon dioxide from the absorption liquid. High-temperature vapor is supplied to the reboiler 31. In the reboiler 31, the absorption liquid is heated by performing heat exchange between the vapor and the absorption liquid. The regeneration tower 3 separately discharges the absorption liquid from which carbon dioxide has been desorbed and the regeneration tower discharge gas containing carbon dioxide as a main component.

The rich line 13 supplies the absorption liquid that has absorbed carbon dioxide from the absorption tower 2 to the regeneration tower 3. Here, the absorption liquid discharged from the absorption tower 2 and flowing through the rich line 13 is referred to as a rich liquid. The rich liquid is an absorption liquid having a high concentration of carbon dioxide after absorbing carbon dioxide in the absorption tower 2. The rich line 13 connects a bottom portion of the absorption tower 2 and an upper portion of the regeneration tower 3. A rich pump 35 is disposed in the rich line 13. The rich pump 35 pressurizes the rich liquid and sends the rich liquid to the regeneration tower 3 through the absorption liquid heat exchanger 4.

The lean line 14 supplies the absorption liquid from which carbon dioxide has been desorbed from the regeneration tower 3 to the absorption tower 2. Here, the absorption liquid discharged from the regeneration tower 3 and flowing through the lean line 14 is referred to as a lean liquid. The lean liquid is an absorption liquid having a low concentration of carbon dioxide after desorbing carbon dioxide in the regeneration tower 3. That is, the concentration of carbon dioxide in the lean liquid is lower than that in the rich liquid. The lean line 14 connects a bottom portion of the regeneration tower 3 and an upper portion of the absorption tower 2. A lean pump 37 is disposed in the lean line 14. The lean pump 37 pressurizes the lean liquid and sends the lean liquid to the absorption tower 2 through the absorption liquid heat exchanger 4.

In the absorption liquid heat exchanger 4, heat exchange is performed between the rich liquid flowing through the rich line 13 and the lean liquid flowing through the lean line 14. As a result, in the absorption liquid heat exchanger 4, the absorption liquid flowing through the rich line 13 in a state of being pressurized by the rich pump 35 to flow from the absorption tower 2 toward the regeneration tower 3 is heated. In addition, in the absorption liquid heat exchanger 4, the absorption liquid flowing through the lean line 14 in a state of being pressurized by the lean pump 37 to flow from the regeneration tower 3 toward the absorption tower 2 is cooled.

The regeneration tower discharge line 15 discharges the regeneration tower discharge gas discharged from the regeneration tower 3 to the outside (outside the system) of the carbon dioxide recovery system 1. The regeneration tower discharge line 15 is connected to the top portion of the regeneration tower 3. The regeneration tower discharge line 15 transfers the regeneration tower discharge gas to an external transfer destination according to a use purpose. The regeneration tower discharge gas containing carbon dioxide as a main component, which is discharged from the regeneration tower discharge line 15, is compressed, liquefied, or the like according to the use purpose, and is used for storage in a tank and storage in an oil field, an aquifer, or the like through a pipeline.

### (Absorption Tower)

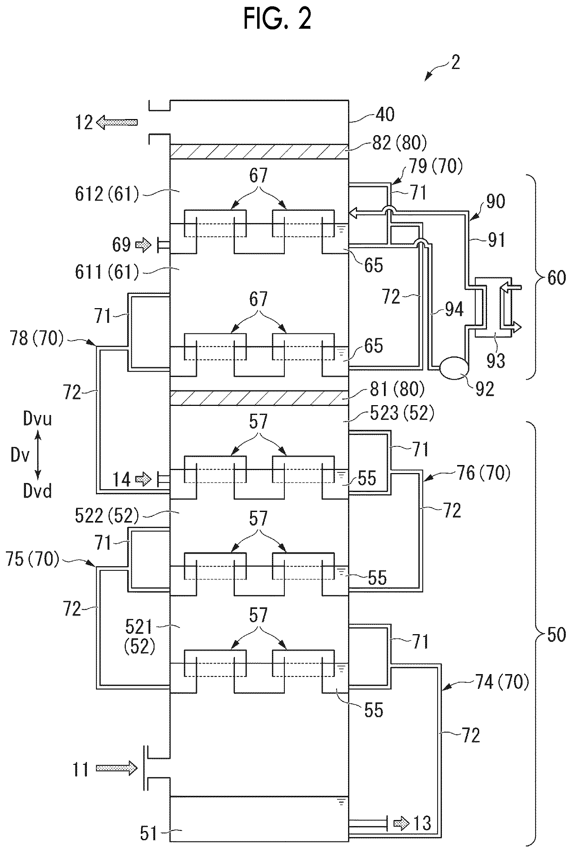

As shown in FIG. 2, the absorption tower 2 according to the first embodiment includes an absorption tower body 40, a carbon dioxide absorption part 50, a washing part 60, a liquid level adjustment part 70, and a demister 80.

The absorption tower body 40 is a tubular container extending in a vertical direction Dv. The gas to be processed can flow through the absorption tower body 40 from a lower side Dvd to an upper side Dvu in the vertical direction Dv. The gas to be processed line 11 is connected to a vicinity of a bottom portion of the absorption tower body 40. The absorption tower discharge line 12 is connected to a vicinity of a top portion of the absorption tower body 40. The rich line 13 is connected to the absorption tower body 40 at a position on the lower side Dvd in the vertical direction Dv with respect to a connection position with the gas to be processed line 11. The lean line 14 is connected to the absorption tower body 40 at a position on the upper side Dvu in the vertical direction Dv with respect to the connection position with the gas to be processed line 11 and at a position on the lower side Dvd in the vertical direction Dv with respect to the connection position with the absorption tower discharge line 12. A washing water supply line 69 is connected to the absorption tower body 40 at a position on the upper side Dvu in the vertical direction Dv with respect to the connection position with the lean line 14 and at a position on the lower side Dvd in the vertical direction Dv with respect to the connection position with the absorption tower discharge line 12.

The carbon dioxide absorption part 50 brings the gas to be processed containing carbon dioxide into contact with the absorption liquid. As a result, the carbon dioxide absorption part 50 absorbs carbon dioxide into the absorption liquid. The carbon dioxide absorption part 50 according to the first embodiment sequentially absorbs carbon dioxide from the gas to be processed into the absorption liquid over a plurality of stages. The carbon dioxide absorption part 50 according to the present embodiment includes a lower storage part 51 and a plurality of absorption units 52.

The lower storage part 51 stores the absorption liquid. The lower storage part 51 stores the absorption liquid having the highest concentration of carbon dioxide in the carbon dioxide absorption part 50. The lower storage part 51 is disposed on the lower side Dvd in the vertical direction Dv with respect to the plurality of absorption units 52. The lower storage part 51 is disposed in the vicinity of the bottom portion of the absorption tower body 40. In the lower storage part 51, the absorption liquid is stored such that a liquid level of the stored absorption liquid is located on the lower side Dvd in the vertical direction Dv with respect to the connection position between the absorption tower body 40 and the gas to be processed line 11. In the lower storage part 51, the absorption liquid is stored such that the connection position between the absorption tower body 40 and the rich line 13 is disposed in the stored absorption liquid.

The plurality of absorption units 52 are disposed side by side in the vertical direction Dv. The plurality of absorption units 52 arranged in the vertical direction Dv sequentially absorb carbon dioxide from the gas to be processed. The number of the absorption units 52 is preferably two or more and eight or less, and more preferably three or more and five or less.

The absorption unit 52 sprays the gas to be processed into the stored absorption liquid. That is, the absorption unit 52 sends the gas to be processed into the absorption liquid to generate bubbles (bubbling) and brings the absorption liquid into contact with the gas to be processed. In this case, the absorption unit 52 sends the gas to be processed into the absorption liquid to form a froth flow.

Here, a plurality of flow states are present in gas-liquid two-phase flow in which a gas flows in a liquid. Specifically, in a case where the flow rate of the gas is small with respect to the flow rate of the liquid, the gas is dispersed and flows in the liquid as small bubbles. As a result, the gas-liquid two-phase flow is bubble flow in which no agitation occurs. The bubble flow indicates a state in which the gas is dispersed and flows in the liquid as small bubbles in a case where the flow rate of the gas is small with respect to the flow rate of the liquid. That is, in the bubble flow, the liquid level of the stored liquid is in a state in which it is hardly disturbed. On the other hand, in a case where the flow rate of the gas increases with respect to the flow rate of the liquid from the bubble flow state, the bubbles in the liquid gradually increase in size and flow vigorously. Thereafter, in a case where the flow rate of the gas becomes equal to or greater than a predetermined value relative to the flow rate of the liquid, the gas vigorously agitates the liquid. As a result, the gas-liquid two-phase flow is a froth flow in which vigorous agitation occurs. That is, in the froth flow, the gas-liquid interface is vigorously disturbed, and the gas and the liquid are mixed with each other, which promotes the movement of carbon dioxide from the gas to the absorption liquid.

In addition, the liquid level of the liquid stored in the storage part (an absorption liquid storage part 55 and a washing water storage part 65) described below is a liquid level in a state before the gas is sprayed from the aeration part (a gas to be processed aeration part 57 and a decarbonated gas aeration part 67) described below. That is, the liquid level is a liquid level of a liquid during the operation stop of the absorption tower 2. In this state, the stored liquid is hardly agitated, and the liquid level in the vertical direction Dv is maintained at a predetermined position.

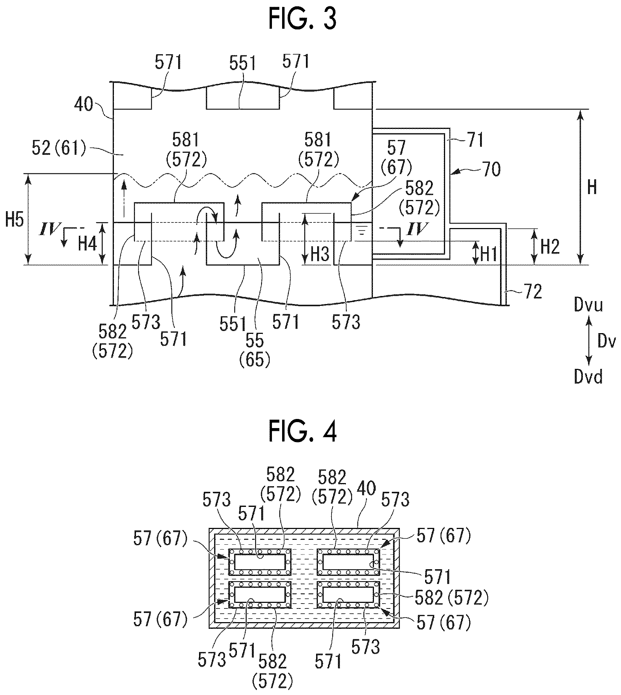

As shown in FIG. 3, the absorption unit 52 according to the present embodiment includes the absorption liquid storage part (storage part) 55 and the gas to be processed aeration part (aeration part) 57.

The absorption liquid storage part 55 stores a liquid to a predetermined depth. The absorption liquid storage part 55 forms a space in which the liquid can be stored by a flat plate-shaped bottom plate part 551 and a side wall of the absorption tower body 40. The absorption liquid storage part 55 according to the present embodiment stores the absorption liquid as the liquid.

The gas to be processed aeration part 57 sprays the gas into the absorption liquid stored in the absorption liquid storage part 55. The gas to be processed aeration part 57 according to the present embodiment sprays the gas to be processed as the gas. The gas to be processed aeration part 57 sprays the gas to be processed into the absorption liquid in a direction including a component toward the lower side Dvd in the vertical direction Dv, or in a horizontal direction. The gas to be processed aeration part 57 according to the present embodiment sprays the gas to be processed downward in the vertical direction Dv. The direction including the component toward the lower side Dvd in the vertical direction Dv is a direction other than a horizontal direction orthogonal to the vertical direction Dv and a direction toward the upper side Dvu in the vertical direction Dv with respect to the horizontal position. Therefore, the direction including the component toward the lower side Dvd in the vertical direction Dv also includes the direction downward in the vertical direction Dv and a direction obliquely toward the lower side Dvd in the vertical direction Dv. The gas to be processed aeration part 57 sprays the gas to be processed such that a flow rate ratio, which is a ratio of the amount of the liquid stored to the flow rate of the gas to be processed to be sprayed, is 1 to 5 L/Nm³. As shown in FIG. 4, a plurality of (four in the present embodiment) gas to be processed aeration parts 57 are disposed at positions spaced from each other.

As shown in FIG. 2, the carbon dioxide absorption part 50 according to the present embodiment includes a first absorption unit 521, a second absorption unit 522, and a third absorption unit 523 as the plurality of absorption units 52. The first absorption unit 521, the second absorption unit 522, and the third absorption unit 523 have the same structure. The first absorption unit 521 is disposed closest to the lower side Dvd in the vertical direction Dv among the three absorption units 52. The third absorption unit 523 is disposed closest to the upper side Dvu in the vertical direction Dv among the three absorption units 52.

The first absorption unit 521 is disposed on the upper side Dvu in the vertical direction Dv with respect to the lower storage part 51. That is, in the first absorption unit 521, the gas to be processed in which carbon dioxide has not yet been absorbed into the absorption liquid is sprayed as a gas from the gas to be processed aeration part 57. In addition, in the first absorption unit 521, the absorption liquid storage part 55 stores the absorption liquid having the highest concentration of carbon dioxide among the plurality of absorption units 52 and having a lower concentration of carbon dioxide than the absorption liquid stored in the lower storage part 51.

The second absorption unit 522 is disposed on the upper side Dvu in the vertical direction Dv with respect to the first absorption unit 521. That is, in the second absorption unit 522, the gas to be processed in which carbon dioxide has been absorbed into the absorption liquid in the first absorption unit 521 is sprayed as a gas from the gas to be processed aeration part 57. In addition, in the second absorption unit 522, the absorption liquid storage part 55 stores the absorption liquid having a lower concentration of carbon dioxide than the absorption liquid stored in the first absorption unit 521.

The third absorption unit 523 is disposed on the upper side Dvu in the vertical direction Dv with respect to the second absorption unit 522. That is, in the third absorption unit 523, the gas to be processed in which carbon dioxide has been absorbed into the absorption liquid in the second absorption unit 522 is sprayed as a gas from the gas to be processed aeration part 57. In addition, in the third absorption unit 523, the absorption liquid storage part 55 stores the absorption liquid having a lower concentration of carbon dioxide than the absorption liquid stored in the second absorption unit 522. In the third absorption unit 523, the absorption liquid is stored such that the connection position between the absorption tower body 40 and the lean line 14 is disposed in the stored absorption liquid.

The washing part 60 brings the gas to be processed after the contact with the absorption liquid in the carbon dioxide absorption part 50 into contact with the washing water. As a result, the washing part 60 recovers the absorption liquid component entrained in the gas to be processed. Here, the gas to be processed after the contact with the absorption liquid in the carbon dioxide absorption part 50 is referred to as a decarbonated gas. The decarbonated gas is the gas to be processed after passing through the carbon dioxide absorption part 50, and carbon dioxide has been removed therefrom. The decarbonated gas is in a state of a large amount of vapor and mist containing components of the absorption liquid are entrained instead of containing almost no carbon dioxide. The washing part 60 according to the first embodiment brings the decarbonated gas into contact with the washing water over two stages to sequentially recover the absorption liquid from the decarbonated gas. The washing part 60 according to the present embodiment includes a plurality of recovery units 61.

Here, the washing water indicates that the absorption liquid component is dissolved in vapor condensate generated in the regeneration tower and condensate generated with cooling in the washing part.

The plurality of recovery units 61 are disposed on the upper side Dvu in the vertical direction Dv with respect to the plurality of absorption units 52. In addition, the plurality of recovery units 61 are disposed side by side in the vertical direction Dv. The plurality of recovery units 61 arranged in the vertical direction Dv sequentially recover the absorption liquid from the decarbonated gas. The number of the recovery units 61 is preferably one or more and five or less, and more preferably two or more and three or less.

The recovery unit 61 sprays the decarbonated gas into the stored washing water. That is, the recovery unit 61 sends the decarbonated gas into the washing water to generate bubbles (bubbling) and brings the washing water into contact with the decarbonated gas. In this case, the recovery unit 61 sends the decarbonated gas into the washing water to form a froth flow.

The recovery unit 61 according to the present embodiment has the same structure as the absorption unit 52. As shown in FIG. 3, the recovery unit 61 includes the washing water storage part (storage part) 65 and the decarbonated gas aeration part (aeration part) 67. That is, the washing water storage part 65 has the same structure as the absorption liquid storage part 55. The washing water storage part 65 according to the present embodiment stores the washing water as a liquid instead of the absorption liquid. In the following, the absorption liquid storage part 55 and the washing water storage part 65 may be collectively referred to as a storage part. In addition, the decarbonated gas aeration part 67 has the same structure as the gas to be processed aeration part 57. The decarbonated gas aeration part 67 according to the present embodiment sprays the decarbonated gas as a gas instead of the gas to be processed. In the following, the gas to be processed aeration part 57 and the decarbonated gas aeration part 67 may be collectively referred to as an aeration part.

Specifically, the gas to be processed aeration part 57 and the decarbonated gas aeration part 67 according to the present embodiment have a box shape and include a discharging hole 571, a direction changing part 572, and a spray hole 573.

The discharging hole 571 discharges the gas toward the upper side Dvu in the vertical direction Dv. The discharging hole 571 is formed to penetrate the bottom plate part 551 in the vertical direction Dv. The discharging hole 571 protrudes from the bottom plate part 551 toward the upper side Dvu in the vertical direction Dv in a tubular shape. The discharging hole 571 is open at a position higher than the liquid level of the liquid stored in the storage part. As a result, the discharging hole 571 supplies the gas present in the space on the lower side Dvd in the vertical direction Dv with respect to one absorption unit 52 (or recovery unit 61) to a position higher than the liquid level of the liquid stored in the storage part toward the upper side Dvu in the vertical direction Dv.

The direction changing part 572 covers the discharging hole 571 from the upper side Dvu in the vertical direction Dv and directs the flow direction of the gas to the lower side Dvd in the vertical direction Dv. The direction changing part 572 sprays the gas into the liquid. The direction changing part 572 curves the flow direction of the gas discharged from the discharging hole 571 to be directed to the lower side Dvd from the upper side Dvu in the vertical direction Dv. The direction changing part 572 according to the present embodiment is formed in a box shape in which the lower side Dvd in the vertical direction Dv is open to cover the opening of the discharging hole 571 from the upper side Dvu in the vertical direction Dv. More specifically, the direction changing part 572 includes a collision plate 581 and a flow path forming plate 582.

The collision plate 581 can collide with the gas discharged from the discharging hole 571 and directed to the upper side Dvu in the vertical direction Dv. The collision plate 581 is disposed on the upper side Dvu in the vertical direction Dv with respect to the opening of the discharging hole 571. The collision plate 581 is formed in a flat plate shape that spreads in a horizontal direction at a position facing the opening of the discharging hole 571.

The flow path forming plate 582 forms a flow path that guides the gas that has collided with the collision plate 581 to the spray hole 573. The flow path forming plate 582 extends from an end portion of the collision plate 581 in a plate shape toward the lower side Dvd in the vertical direction Dv. The flow path forming plate forms a flow path extending in the vertical direction Dv between the flow path forming plate and the outer surface of the discharging hole 571.

The spray hole 573 is connected to a lower end of the flow path forming plate in the vertical direction Dv. The spray hole 573 sprays the gas that has flowed through the flow path formed by the flow path forming plate 582 toward the lower side Dvd in the vertical direction Dv into the liquid. The spray hole 573 is open toward the lower side Dvd in the vertical direction Dv. The spray hole 573 is, for example, a porous plate having a plurality of openings.

In addition, as shown in FIG. 2, the washing part 60 according to the present embodiment includes a first recovery unit 611 and a second recovery unit 612 as the plurality of recovery units 61. The first recovery unit 611 and the second recovery unit 612 have the same structure.

The first recovery unit 611 is disposed on the upper side Dvu in the vertical direction Dv with respect to the carbon dioxide absorption part 50. That is, in the first recovery unit 611, the decarbonated gas, which is the gas to be processed in which carbon dioxide has been absorbed into the absorption liquid in the third absorption unit 523, is sprayed as a gas from the decarbonated gas aeration part 67. In this case, the decarbonated gas from the third absorption unit 523 is supplied to the first recovery unit 611 after passing through the demister 80 described below. In addition, in the first recovery unit 611, the washing water storage part 65 stores the washing water having the highest concentration of the component of the absorption liquid among the plurality of recovery units 61 and having a significantly lower concentration of the component of the absorption liquid than the absorption liquid stored in the third absorption unit 523.

The second recovery unit 612 is disposed on the upper side Dvu in the vertical direction Dv with respect to the first recovery unit 611. That is, in the second recovery unit 612, the decarbonated gas in which the component of the absorption liquid has been recovered in the washing water in the first recovery unit 611 is sprayed from the decarbonated gas aeration part 67. In the second recovery unit 612, for example, the washing water is supplied from the washing water supply line 69 connected to the regeneration tower 3. In addition, in the second recovery unit 612, the washing water storage part 65 stores the washing water having a lower concentration of the component of the absorption liquid than the washing water stored in the first recovery unit 611. In the second recovery unit 612, the washing water is stored such that the connection position between the absorption tower body 40 and the washing water supply line 69 is disposed in the stored washing water.

The liquid level adjustment part 70 adjusts the liquid level of the liquid stored in the absorption unit 52 or the recovery unit 61 to be maintained at a constant position. The liquid level adjustment part 70 separates the gas supplied from the spray hole 573 contained in the liquid stored in the absorption unit 52 or the recovery unit 61, and supplies the gas to the gas phase part of the absorption unit 52 or the recovery unit 61 from the upper portion of the gas-liquid separation line 71 and supplies the liquid to the liquid stored in another absorption unit 52 or recovery unit 61 located on the lower side Dvd in the vertical direction Dv from the overflow line 72 to merge with the liquid. The liquid level adjustment part 70 according to the present embodiment includes a gas-liquid separation line 71 and an overflow line 72.

The gas-liquid separation line 71 is a pipe that connects the liquid phase part stored in the storage part and the space on the upper side Dvu in the vertical direction Dv with respect to the liquid in the storage part. The gas-liquid separation line 71 is connected to the space on the upper side Dvu in the vertical direction Dv with respect to the liquid level in a state in which the gas coexists in the liquid as the gas is sprayed from the gas aeration part during the operation of the device. The gas-liquid separation line 71 supplies only the gas out of the liquid and the gas flowing therethrough to the space on the upper side Dvu in the vertical direction Dv with respect to the liquid level.

The overflow line 72 causes the liquid after the gas is separated in the gas-liquid separation line 71 to flow toward the lower side Dvd in the vertical direction Dv. The overflow line 72 is connected to the gas-liquid separation line 71 at the same position as the liquid level of the liquid stored in the storage part during the stop of the device in the vertical direction Dv. The connection position between the overflow line 72 and the gas-liquid separation line 71 is set to a position lower than the opening position of the discharging hole 571 in the vertical direction Dv. The connection position between the overflow line 72 and the gas-liquid separation line 71 is set to a position higher than a spray position of the gas by the spray hole 573 in the vertical direction Dv. In addition, the overflow line 72 is connected to the storage part of another absorption unit 52 or recovery unit 61 located on the lower side Dvd in the vertical direction Dv with respect to the storage part to which the gas-liquid separation line 71 is connected.

The absorption tower 2 according to the present embodiment includes a plurality of the liquid level adjustment parts 70. Specifically, the absorption tower 2 includes a first absorption liquid adjustment part 74, a second absorption liquid adjustment part 75, a third absorption liquid adjustment part 76, a first washing water adjustment part 78, and a second washing water adjustment part 79 as the plurality of liquid level adjustment parts 70.

The first absorption liquid adjustment part 74 separates the gas to be processed mixed in the absorption liquid stored in the first absorption unit 521. The first absorption liquid adjustment part 74 supplies the separated gas to be processed to the space on the upper side Dvu in the vertical direction Dv with respect to the absorption liquid storage part 55 of the first absorption unit 521. That is, the first absorption liquid adjustment part 74 supplies the separated gas to be processed to the space between the absorption liquid storage part 55 of the first absorption unit 521 and the absorption liquid storage part 55 of the second absorption unit 522 in the vertical direction Dv. The first absorption liquid adjustment part 74 supplies the separated absorption liquid to the absorption liquid stored in the lower storage part 51 to merge with the absorption liquid.

The second absorption liquid adjustment part 75 separates the gas to be processed mixed in the absorption liquid stored in the second absorption unit 522. The second absorption liquid adjustment part 75 supplies the separated gas to be processed to the space on the upper side Dvu in the vertical direction Dv with respect to the absorption liquid storage part 55 of the second absorption unit 522. That is, the second absorption liquid adjustment part 75 supplies the separated gas to be processed to the space between the absorption liquid storage part 55 of the second absorption unit 522 and the absorption liquid storage part 55 of the third absorption unit 523 in the vertical direction Dv. The second absorption liquid adjustment part 75 supplies the separated absorption liquid to the absorption liquid stored in the absorption liquid storage part 55 of the first absorption unit 521 to merge with the absorption liquid.

The third absorption liquid adjustment part 76 separates the gas to be processed mixed in the absorption liquid stored in the third absorption unit 523. The third absorption liquid adjustment part 76 supplies the separated gas to be processed to the space on the upper side Dvu in the vertical direction Dv with respect to the absorption liquid storage part 55 of the third absorption unit 523. That is, the third absorption liquid adjustment part 76 supplies the separated gas to be processed to the space between the absorption liquid storage part 55 of the third absorption unit 523 and the first demister 81 in the vertical direction Dv. The third absorption liquid adjustment part 76 supplies the separated absorption liquid to the absorption liquid stored in the absorption liquid storage part 55 of the second absorption unit 522 to merge with the absorption liquid.

The first washing water adjustment part 78 separates the decarbonated gas mixed in the washing water stored in the first recovery unit 611. The first washing water adjustment part 78 supplies the separated decarbonated gas to the space on the upper side Dvu in the vertical direction Dv with respect to the washing water storage part 65 of the first recovery unit 611. That is, the first washing water adjustment part 78 supplies the separated decarbonated gas to the space between the washing water storage part 65 of the first recovery unit 611 and the washing water storage part 65 of the second recovery unit 612 in the vertical direction Dv. The first washing water adjustment part 78 supplies the separated washing water to the absorption liquid stored in the absorption liquid storage part 55 of the third absorption unit 523 to merge with the absorption liquid.

The second washing water adjustment part 79 separates the decarbonated gas mixed in the washing water stored in the second recovery unit 612. The second washing water adjustment part 79 supplies the separated decarbonated gas to the space between the washing water storage part 65 of the second recovery unit 612 and the second demister 82 in the vertical direction Dv. The second washing water adjustment part 79 supplies the separated washing water to the washing water stored in the washing water storage part 65 of the first recovery unit 611 to merge with the washing water.

The demister 80 is installed to remove mist (liquid droplets having a small particle diameter) contained in the gas by allowing the gas to flow. The gas flows from the lower side Dvd to the upper side Dvu in the vertical direction Dv in the demister 80. For example, the demister 80 is formed by stacking a plurality of nets woven from thin wires in multiple layers. A plurality of the demisters 80 are disposed inside the absorption tower body 40. In the present embodiment, the first demister 81 and the second demister 82 are disposed.

The first demister 81 is installed to remove the mist in the gas to be processed after the contact with the absorption liquid inside the absorption tower body 40. The first demister 81 is disposed between the carbon dioxide absorption part 50 and the washing part 60. Specifically, the first demister 81 is disposed between the third absorption unit 523 and the first recovery unit 611 in the vertical direction Dv. The first demister 81 is disposed on the upper side Dvu in the vertical direction Dv with respect to the connection position between the gas-liquid separation line 71 of the third absorption unit 523 and the absorption tower body 40.

The second demister 82 is installed to remove the mist in the decarbonated gas after the contact with the washing water inside the absorption tower body 40. The second demister 82 is disposed between the washing part 60 and the absorption tower discharge line 12. Specifically, the second demister 82 is disposed between the second recovery unit 612 and the top surface of the absorption tower 2 in the vertical direction Dv. The second demister 82 is disposed on the upper side Dvu in the vertical direction Dv with respect to the connection position between the gas-liquid separation line 71 of the second recovery unit 612 and the absorption tower body 40. The second demister 82 is disposed on the lower side Dvd in the vertical direction Dv with respect to the connection position between the absorption tower discharge line 12 and the absorption tower body 40.

The cooling part 90 cools the liquid in the absorption tower body 40. At least one cooling part 90 is disposed for one absorption tower body 40. Only one cooling part 90 of the present embodiment is disposed. The cooling part 90 is installed for the purpose of suppressing an increase in a water vapor amount in the decarbonated gas discharged from the absorption tower discharge line 12 and an increase in absorption liquid component vapor due to heat generation accompanying the absorption reaction of the carbon dioxide in the carbon dioxide absorption part 50, which causes the liquid and the gas to increase in temperature, and the cooling part 90 can lower the temperature of the liquid and the gas by cooling the liquid. The cooling part 90 cools the washing water flowing through a cooling water extraction line 94 and supplies the washing water to the space of the washing water storage part 65 of the second recovery unit 612 on the upper side Dvu. Specifically, the cooling part 90 includes a cooling line 91, a cooling pump 92, a washing water cooler 93, and the cooling water extraction line 94.

The cooling pump 92 is installed between the cooling water extraction line 94 and the cooling line 91, and pumps the flowing washing water. The washing water cooler 93 is disposed in the middle of the cooling line 91 and cools the washing water pumped by the cooling pump 92. Specifically, the washing water cooler 93 performs heat exchange between the cooling water supplied from the outside and the washing water flowing through the cooling line 91 to cool the washing water.

In addition, as conditions for operating the absorption tower 2 as described above, a superficial velocity Ug in a case of spraying the gas in the gas to be processed aeration part 57 and the decarbonated gas aeration part 67 is preferably in a range of 0.5 m/s to 2.5 m/s. In addition, a flow rate ratio L/G of the gas in the liquid in a case of spraying the gas in the gas to be processed aeration part 57 and the decarbonated gas aeration part 67 is preferably in a range of 0.5 L/Nm³ to 5.0 L/Nm³. In addition, in a case where the spray hole 573 is a porous plate, an opening ratio thereof is preferably in a range of 25% to 70%. In this case, a size of the spray hole 573 is preferably in a range of 1 to 10 mm.

Here, as shown in FIG. 3, a height at which the spray hole 573 is disposed with respect to the bottom plate part 551 in the vertical direction Dv and at which the gas is sprayed is referred to as a blow-out height H1. In addition, a height of a connection position between the overflow line 72 and the gas-liquid separation line 71 with respect to the bottom plate part 551 in the vertical direction Dv is referred to as an overflow height H2. In addition, a height of an opening position of the discharging hole 571 with respect to the bottom plate part 551 in the vertical direction Dv is referred to as a gas turn-back height H3. In addition, a height of a liquid level of the liquid stored with respect to the bottom plate part 551 in the vertical direction Dv during the stop of the device is referred to as a liquid level height H4. In addition, a height of the highest liquid level in a state of being greatly agitated after the gas is sprayed from the gas aeration part with respect to the bottom plate part 551 in the vertical direction Dv during the operation of the device is referred to as a highest liquid level height H5.

The overflow height H2 is equal to the liquid level height H4. In addition, the blow-out height H1 is preferably lower than the overflow height H2. The gas turn-back height H3 is preferably higher than the overflow height H2. The gas turn-back height H3 is preferably lower than the highest liquid level height H5. In addition, a height of the absorption unit 52 and the recovery unit 61 in the vertical direction Dv is referred to as a stage height H. The stage height H is higher than the highest liquid level height H5.

In the carbon dioxide recovery system 1 having the above-described configuration, as shown in FIG. 1, the gas to be processed flowing through the gas to be processed line 11 is sent to the absorption tower 2. The gas to be processed supplied to the absorption tower 2 is brought into contact with the absorption liquid in the absorption tower 2 to remove carbon dioxide. As a result, the absorption tower discharge gas from which carbon dioxide has been removed is discharged from the absorption tower 2 to the outside through the absorption tower discharge line 12. In addition, in the absorption tower 2, a rich liquid that is an absorption liquid having absorbed carbon dioxide is generated. The rich liquid is pressurized by the rich pump 35 through the rich line 13 and is sent to the absorption liquid heat exchanger 4. The rich liquid is heated in the absorption liquid heat exchanger 4 and is further sent to the regeneration tower 3 by flowing through the rich line 13. In the regeneration tower 3, the rich liquid is heated by the reboiler 31 to desorb carbon dioxide from the rich liquid. As a result, in the regeneration tower 3, a lean liquid that is an absorption liquid having desorbed carbon dioxide is generated. The lean liquid is pressurized by the lean pump 37 through the lean line 14 and is sent to the absorption liquid heat exchanger 4. The lean liquid is cooled by performing heat exchange with the rich liquid in the absorption liquid heat exchanger 4. The cooled lean liquid is returned to the absorption tower 2. In this way, the absorption liquid circulates between the absorption tower 2 and the regeneration tower 3. In addition, in the regeneration tower 3, the regeneration tower discharge gas containing carbon dioxide generated by desorbing carbon dioxide from the rich liquid as a main component is generated and is sent to the regeneration tower discharge line 15.

In addition, as shown in FIG. 2, in the absorption tower 2, the gas to be processed supplied from the gas to be processed line 11 is first supplied to the upper side Dvu of the lower storage part 51. In the lower storage part 51, the absorption liquid (rich liquid) that has absorbed carbon dioxide in the plurality of absorption units 52 is stored and is sent to the rich line 13. In addition, the supplied gas to be processed moves to the upper side Dvu in the vertical direction Dv and is sent to the plurality of absorption units 52.

Specifically, the gas to be processed is sent to the first absorption unit 521. In the first absorption unit 521, the gas to be processed is sprayed from the gas to be processed aeration part 57 into the absorption liquid stored in the absorption liquid storage part 55 such that a froth flow is generated. More specifically, as shown in FIG. 3, the gas to be processed directed from the lower storage part 51 to the upper side Dvu in the vertical direction Dv passes through the discharging hole 571 toward the upper side Dvu in the vertical direction Dv. The gas to be processed that has passed through the discharging hole 571 collides with the collision plate 581, and the flow direction is changed toward the lower side Dvd in the vertical direction Dv. The gas to be processed directed to the lower side Dvd in the vertical direction Dv reaches the spray hole 573 through the flow path formed by the flow path forming plate 582. Thereafter, the gas to be processed is sprayed from the plurality of spray holes 573 into the absorption liquid toward the lower side Dvd in the vertical direction Dv. The gas to be processed sprayed into the absorption liquid flows in the absorption liquid toward the upper side Dvu in the vertical direction Dv to form a froth flow. As a result, the gas to be processed and the absorption liquid come into contact with each other to be vigorously mixed, and a part of the carbon dioxide contained in the gas to be processed is absorbed in the absorption liquid. The absorption liquid that has absorbed carbon dioxide is sent to the lower storage part 51 through the first absorption liquid adjustment part 74. In addition, the gas to be processed that has exited through the stored absorption liquid moves in the space of the absorption liquid on the upper side Dvu toward the upper side Dvu in the vertical direction Dv and is sent to the second absorption unit 522.

In the second absorption unit 522 as well, the gas to be processed flows in the same manner as in the first absorption unit 521. As a result, in the second absorption unit 522 as well, the gas to be processed and the absorption liquid come into contact with each other, and a part of the carbon dioxide contained in the gas to be processed is absorbed in the absorption liquid. The absorption liquid that has absorbed carbon dioxide is sent to the absorption liquid storage part 55 of the first absorption unit 521 through the second absorption liquid adjustment part 75. In addition, the gas to be processed that has exited through the absorption liquid moves in the space of the absorption liquid on the upper side Dvu toward the upper side Dvu in the vertical direction Dv and is sent to the third absorption unit 523.

In the third absorption unit 523 as well, the gas to be processed flows in the same manner as in the first absorption unit 521. In this case, in the absorption liquid storage part 55 of the third absorption unit 523, the lean liquid supplied through the lean line 14 merges with the stored absorption liquid. In the third absorption unit 523 as well, the gas to be processed and the absorption liquid come into contact with each other, and a part of the carbon dioxide contained in the gas to be processed is absorbed in the absorption liquid. The absorption liquid that has absorbed carbon dioxide is sent to the absorption liquid storage part 55 of the second absorption unit 522 through the third absorption liquid adjustment part 76. In addition, the gas to be processed that has exited through the stored absorption liquid moves in the space of the absorption liquid on the upper side Dvu toward the upper side Dvu in the vertical direction Dv and is sent to the first demister 81.

As described above, in the carbon dioxide absorption part 50 of the present embodiment, the carbon dioxide in the gas to be processed is absorbed in the absorption liquid over three stages of the first absorption unit 521, the second absorption unit 522, and the third absorption unit 523. As a result, most of the carbon dioxide contained in the gas to be processed is removed, and the decarbonated gas is obtained. The decarbonated gas flows toward the upper side Dvu in the vertical direction Dv and passes through the first demister 81 to remove the mist contained in the decarbonated gas. The decarbonated gas from which the mist has been removed is sent to the washing part 60.

Specifically, the decarbonated gas is sent to the first recovery unit 611. In the first recovery unit 611, the decarbonated gas flows in the same manner as the gas to be processed flowing through the first absorption unit 521. As a result, in the first recovery unit 611, the decarbonated gas and the washing water come into contact with each other. The washing water that has recovered the absorption liquid component from the decarbonated gas is sent to the absorption liquid storage part 55 of the third absorption unit 523 through the first washing water adjustment part 78. In addition, the decarbonated gas that has exited through the washing water moves in the space of the washing water on the upper side Dvu toward the upper side Dvu in the vertical direction Dv and is sent to the second recovery unit 612.

In the second recovery unit 612 as well, the decarbonated gas flows in the same manner as in the first recovery unit 611. In this case, in the washing water storage part 65 of the second recovery unit 612, new washing water is supplied through the washing water supply line 69 and merges with the stored washing water. In the second recovery unit 612 as well, the decarbonated gas and the washing water come into contact with each other. The washing water that has recovered the absorption liquid component from the decarbonated gas is sent to the washing water storage part 65 of the first recovery unit 611 through the second washing water adjustment part 79. Further, a part of the washing water sent to the first recovery unit 611 is cooled through the cooling part 90 and is returned to the washing water storage part 65 of the second recovery unit 612. In addition, the decarbonated gas that has exited through the stored washing water moves in the space of the washing water on the upper side Dvu toward the upper side Dvu in the vertical direction Dv and is sent to the second demister 82.

As described above, in the washing part 60 of the present embodiment, the absorption liquid component entrained in the decarbonated gas is recovered over two stages of the first recovery unit 611 and the second recovery unit 612. As a result, most of the vapor and mist of the absorption liquid entrained in the decarbonated gas are removed, and the absorption tower discharge gas is obtained. The absorption tower discharge gas flows toward the upper side Dvu in the vertical direction Dv and passes through the second demister 82 to further remove the mist contained in the absorption tower discharge gas. The absorption tower discharge gas from which the mist has been removed is discharged from the absorption tower discharge line 12 to the outside of the absorption tower body 40.

### (Operations and Effects)

In such an absorption tower 2, the gas to be processed is sprayed into the absorption liquid stored in the absorption unit 52. Therefore, the stored absorption liquid and the gas to be processed can be efficiently brought into contact with each other. As a result, the absorption reaction of carbon dioxide by the absorption liquid is promoted. In particular, in the present embodiment, the gas to be processed is sprayed into the absorption liquid to form a froth flow. In a case where the froth flow is generated in the absorption liquid, the absorption liquid is vigorously agitated by the gas to be processed, so that the absorption liquid and the gas to be processed come into contact with each other more efficiently, and the absorption reaction of carbon dioxide by the absorption liquid is further promoted. As a result, even in a case where this height is suppressed in the absorption unit 52, the recovery efficiency of carbon dioxide from the gas to be processed can be improved.

Further, the decarbonated gas, which is the gas to be processed after passing through the carbon dioxide absorption part 50, is sprayed into the washing water stored in the recovery unit 61. Therefore, the stored washing water and the decarbonated gas can be efficiently brought into contact with each other. As a result, the recovery of the absorption liquid component by the washing water is promoted. In particular, in the present embodiment, the decarbonated gas is sprayed into the washing water to form a froth flow. In a case where the froth flow is generated in the washing water, the washing water is vigorously agitated by the decarbonated gas, so that the washing water and the decarbonated gas come into contact with each other more efficiently, and the recovery of the absorption liquid component by the washing water is further promoted. As a result, even in a case where this height is suppressed in the recovery unit 61, the recovery efficiency of the absorption liquid component from the decarbonated gas can be improved.

As a result, the height of the absorption tower 2 can be suppressed while maintaining the recovery efficiency of carbon dioxide from the gas and the recovery efficiency of the absorption liquid component contained in the decarbonated gas after the carbon dioxide has been recovered equivalent to those of the absorption tower having the height in the related art.

In addition, in the present embodiment, the carbon dioxide absorption part 50 includes the plurality of absorption units 52 arranged in the vertical direction Dv. As described above, by arranging the plurality of absorption units 52 having high absorption efficiency of carbon dioxide, the recovery efficiency of carbon dioxide from the gas to be processed can be further improved while suppressing the height of the entire carbon dioxide absorption part 50 as compared with a case where the other devices are configured. Similarly, the washing part 60 includes the plurality of recovery units 61 arranged in the vertical direction Dv. As described above, by arranging the plurality of recovery units 61 having high recovery efficiency of the absorption liquid component, the recovery efficiency of the absorption liquid component from the decarbonated gas can be further improved while suppressing the height of the washing part 60 as compared with a case where the other devices are configured. Further, the plurality of recovery units 61 are stacked on the plurality of absorption units 52 on the upper side Dvu in the vertical direction Dv in the absorption tower body 40. As described above, even in a case where the plurality of absorption units 52 and the plurality of recovery units 61 are disposed in one absorption tower body 40, the recovery efficiency of carbon dioxide from the gas to be processed and the recovery efficiency of the absorption liquid component contained in the decarbonated gas can be improved while suppressing the height of the entire absorption tower 2.

In addition, the gas to be processed aeration part 57 sprays the gas to be processed into the absorption liquid toward the lower side Dvd in the vertical direction Dv. Similarly, the decarbonated gas aeration part 67 sprays the decarbonated gas into the washing water toward the lower side Dvd in the vertical direction. As described above, by spraying the gas into the liquid toward the lower side Dvd in the vertical direction Dv, the contact time between the liquid and the gas can be increased as compared with a case where the gas is sprayed toward the upper side Dvu in the vertical direction Dv. That is, the contact time between the gas sprayed without increasing the position of the liquid level of the stored liquid and the liquid is increased. As a result, the recovery efficiency of carbon dioxide from the gas to be processed and the recovery efficiency of the absorption liquid component contained in the decarbonated gas can be further improved. Therefore, the height of the absorption tower 2 can be further suppressed.

In addition, the gas to be processed aeration part 57 and the decarbonated gas aeration part 67 include a discharging hole 571, a direction changing part 572, and a spray hole 573. The gas to be processed or the decarbonated gas is discharged toward the upper side Dvu in the vertical direction Dv by the discharging hole 571. Therefore, in a case where the absorption unit 52 or the recovery unit 61 is stacked in the vertical direction Dv, the gas to be processed or the decarbonated gas can be easily supplied from the absorption unit 52 or the recovery unit 61 located on the lower side Dvd in the vertical direction Dv to another absorption unit 52 or recovery unit 61 located on the upper side Dvu in the vertical direction Dv through the discharging hole 571. The flow direction of the gas to be processed or the decarbonated gas supplied from the discharging hole 571 is changed by the direction changing part 572, and the gas to be processed or the decarbonated gas is sprayed from the spray hole 573. Therefore, a configuration in which the gas to be processed or the decarbonated gas is sprayed into the stored absorption liquid or washing water toward the lower side Dvd in the vertical direction Dv can be easily obtained. Therefore, it is possible to spray the gas supplied from the absorption unit 52 or the recovery unit 61 on the lower side Dvd into the stored liquid toward the lower side Dvd in the vertical direction Dv by a simple configuration.

In addition, the liquid level adjustment part 70 that adjusts the liquid level of the liquid stored in the absorption unit 52 or the recovery unit 61 to be maintained at a constant position is disposed. Therefore, even in a case where the flow rate of the gas supplied from the gas to be processed aeration part 57 and the decarbonated gas aeration part 67 changes, the liquid level of the stored liquid can be maintained at a constant position. As a result, the gas to be processed and the absorption liquid or the decarbonated gas and the washing water can be stably brought into contact with each other regardless of the fluctuation in the flow rate of the supplied gas to be processed or decarbonated gas.

In addition, in the liquid level adjustment part 70, the gas-liquid separation line 71 and the overflow line 72 are connected at the same position as the liquid level of the liquid stored in the absorption liquid storage part 55 or the washing water storage part 65. Therefore, in a case where the liquid is about to be stored beyond the connection position between the gas-liquid separation line 71 and the overflow line 72, the stored liquid is sent from the overflow line 72 to the absorption liquid storage part 55 of the other absorption unit 52 or the washing water storage part 65 of the recovery unit 61 on the lower side Dvd in the vertical direction Dv. Therefore, the position of the liquid level of the liquid stored in the absorption liquid storage part 55 or the washing water storage part 65 can be maintained without using a complicated device.

In addition, the gas turn-back height H3 is higher than the overflow height H2, and the blow-out height H1 is lower than the overflow height H2. That is, in the vertical direction Dv, the opening position of the discharging hole 571 is higher than the connection position between the gas-liquid separation line 71 and the overflow line 72, and the spray position of the gas by the spray hole 573 is lower than the connection position. The liquid level height H4, which is the liquid level of the liquid during the operation stop of the absorption tower 2, is always at a position lower than the gas turn-back height H3 associated with the opening position of the discharging hole 571 and is always at a position higher than the blow-out height H1 associated with the installation position of the spray hole 573 as the opening position of the discharging hole 571 is higher than the connection position between the gas-liquid separation line and the overflow line 72. Therefore, it is possible to suppress the occurrence of an event in which the gas is not sprayed into the liquid at the start of the operation of the absorption tower 2. In addition, in a case where the opening position of the discharging hole 571 is lower than the connection position between the gas-liquid separation line and the overflow line 72, the liquid level height H4 during the operation stop of the absorption tower 2 is lowered to the gas turn-back height H3, and the liquid level height H4 cannot be maintained at the overflow height H2. However, in the present embodiment, the liquid level height H4, which is the liquid level of the liquid during the operation stop of the absorption tower 2, can always be maintained at the overflow height H2 and can always be at a position higher than the blow-out height H1 associated with the installation position of the spray hole 573. Therefore, the gas and the liquid can be stably brought into contact with each other immediately after the start of the operation.

In addition, in the absorption tower body 40, the temperature of the absorption liquid and the gas is increased by the heat generation during the absorption reaction of carbon dioxide by the absorption liquid. In particular, in a case where the carbon dioxide is absorbed in the absorption liquid by the plurality of absorption units 52 as in the present embodiment, the temperature of the third absorption unit 523 is gradually increased from the first absorption unit 521. In a case where the temperature excessively increases in the absorption unit 52, the water vapor amount in the decarbonated gas or the absorption liquid component vapor may increase. However, the washing water present in the second recovery unit 612 is cooled by the cooling part 90. That is, the space in the vicinity of the connection position with the absorption tower discharge line 12 is cooled by the cooling part 90, the water vapor and the absorption liquid component in the decarbonated gas at the outlet of the recovery unit 61 are condensed, and the water vapor and the absorption liquid component are recovered together with the washing water of the washing part, whereby the discharge of the absorption liquid component in the decarbonated gas can be suppressed.

In addition, by providing the absorption tower 2 as described above, the carbon dioxide recovery system can be provided even in a case where the height of the installation site is limited.

### <Second Embodiment>

Next, a carbon dioxide recovery system 1A of a second embodiment according to the present disclosure will be described. In the second embodiment to be described below, the same reference numerals will be assigned to configurations that are common to those of the above-described first embodiment in the drawings, and description thereof will be omitted. In the second embodiment, the configuration of the absorption tower 2A is different from that of the first embodiment.

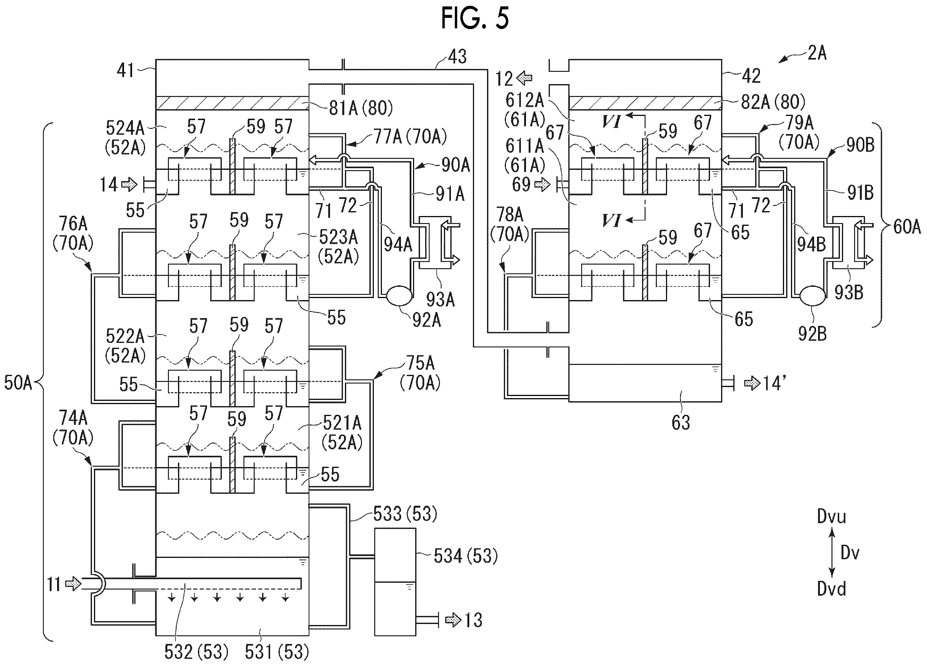

As shown in FIG. 5, the absorption tower 2A according to the second embodiment includes a first absorption tower body 41, a second absorption tower body 42, a body connection line 43, a carbon dioxide absorption part 50A, a washing part 60A, a liquid level adjustment part 70A, and the demister 80.

The first absorption tower body 41 is a tubular container extending in the vertical direction Dv. The gas to be processed can flow through the first absorption tower body 41 from the lower side Dvd to the upper side Dvu in the vertical direction Dv. The gas to be processed line 11 is connected to a vicinity of a bottom portion of the first absorption tower body 41. The body connection line 43 is connected to a vicinity of a top portion of the first absorption tower body 41. The lean line 14 is connected to the first absorption tower body 41 at a position on the upper side Dvu in the vertical direction Dv with respect to the connection position with the gas to be processed line 11 and at a position on the lower side Dvd in the vertical direction Dv with respect to the connection position with the body connection line 43.

The second absorption tower body 42 is a tubular container extending in the vertical direction Dv. The second absorption tower body 42 is formed to have a lower height in the vertical direction Dv than the absorption tower body 40 of the first embodiment and the first absorption tower body 41. The second absorption tower body 42 is disposed to be spaced from the first absorption tower body 41 in the horizontal direction. The position of the top portion of the second absorption tower body 42 is disposed not to protrude to the upper side Dvu in the vertical direction Dv with respect to the position of the top portion of the first absorption tower body 41. The decarbonated gas can flow through the second absorption tower body 42 from the lower side Dvd to the upper side Dvu in the vertical direction Dv. The absorption tower discharge line 12 is connected to a vicinity of a top portion of the second absorption tower body 42. The washing water supply line 69 is connected to the second absorption tower body 42 at a position on the lower side Dvd in the vertical direction Dv with respect to the connection position with the absorption tower discharge line 12. The body connection line 43 is connected to a vicinity of a bottom portion of the second absorption tower body 42. A washing water discharge line 14' is connected to the second absorption tower body 42 at a position on the lower side Dvd in the vertical direction Dv with respect to the connection position with the body connection line 43. The washing water discharge line merges with the lean line 14 through a pump (not shown).

The body connection line 43 connects the first absorption tower body 41 and the second absorption tower body 42. The body connection line 43 sends the decarbonated gas discharged from the first absorption tower body 41 to the second absorption tower body 42. The body connection line 43 is connected to a vicinity of the top portion of the first absorption tower body 41 and is connected to the vicinity of the bottom portion of the second absorption tower body 42.

The carbon dioxide absorption part 50A according to the second embodiment includes a lower aeration part 53 and a plurality of absorption units 52A.

The lower aeration part 53 stores the absorption liquid and sprays the gas to be processed into the absorption liquid. The lower aeration part 53 is disposed on the lower side Dvd in the vertical direction Dv with respect to the plurality of absorption units 52A. The lower aeration part 53 is disposed in the vicinity of a bottom portion of the first absorption tower body 41. The lower aeration part 53 includes a first bottom storage part 531, an aeration pipe 532, a lower gas-liquid separation line 533, and a lower liquid level adjustment tank 534.

The first bottom storage part 531 stores the absorption liquid. The first bottom storage part 531 stores the absorption liquid having the highest concentration of carbon dioxide in the carbon dioxide absorption part 50A. In the first bottom storage part 531, the absorption liquid is stored such that a liquid level of the stored absorption liquid is located on the upper side Dvu in the vertical direction Dv with respect to the connection position between the first absorption tower body 41 and the gas to be processed line 11.

The aeration pipe 532 extends from the connection position between the first absorption tower body 41 and the gas to be processed line 11 into the stored absorption liquid. The aeration pipe 532 is horizontally disposed, and a plurality of holes facing the lower side Dvd in the vertical direction Dv are formed in the aeration pipe 532. The aeration pipe 532 sprays the gas to be processed into the stored absorption liquid. The aeration pipe 532 sprays the gas to be processed toward the lower side Dvd in the vertical direction Dv to form a froth flow in the absorption liquid.

The lower gas-liquid separation line 533 is a pipe that connects the inside of the absorption liquid stored in the first bottom storage part 531 and the space on the upper side Dvu in the vertical direction Dv with respect to the absorption liquid in the first bottom storage part 531. The lower gas-liquid separation line 533 can supply the absorption liquid stored in the first bottom storage part 531 and the gas to be processed contained in the absorption liquid to the upper side Dvu in the vertical direction Dv. The lower gas-liquid separation line 533 is connected to the space on the upper side Dvu in the vertical direction Dv with respect to the liquid level in a state of being greatly agitated after the gas to be processed is sprayed from the aeration pipe 532. The lower gas-liquid separation line 533 supplies only the gas to be processed out of the absorption liquid and the gas to be processed flowing therethrough to the space on the upper side Dvu in the vertical direction Dv with respect to the liquid level.

The lower liquid level adjustment tank 534 stores the absorption liquid such that the absorption liquid is located on the lower side Dvd in the vertical direction Dv with respect to a liquid level of the absorption liquid stored in the first bottom storage part 531. The lower liquid level adjustment tank 534 is connected to the lower gas-liquid separation line 533 at the same position as the liquid level of the absorption liquid stored in the first bottom storage part 531 during the operation stop in the vertical direction Dv. The rich line 13 is connected to the lower liquid level adjustment tank 534 at a position on the lower side Dvd in the vertical direction Dv with respect to the connection position with the lower gas-liquid separation line 533.

The plurality of absorption units 52A are disposed in the first absorption tower body 41. The carbon dioxide absorption part 50A according to the second embodiment includes a first absorption unit 521A, a second absorption unit 522A, a third absorption unit 523A, and a fourth absorption unit 524A as the plurality of absorption units 52A. The first absorption unit 521A, the second absorption unit 522A, the third absorption unit 523A, and the fourth absorption unit 524A have the same structure. In the second embodiment, the first absorption unit 521A, the second absorption unit 522A, the third absorption unit 523A, and the fourth absorption unit 524A are disposed side by side in this order toward the upper side Dvu in the vertical direction Dv with respect to the lower aeration part 53. That is, the first absorption unit 521A is disposed closest to the lower side Dvd in the vertical direction Dv among the four absorption units 52A. The fourth absorption unit 524A is disposed closest to the upper side Dvu in the vertical direction Dv among the four absorption units 52A.

In addition, in the plurality of absorption units 52A, the concentration of carbon dioxide in the absorption liquid disposed on the upper side Dvu in the vertical direction Dv is lower. Further, in the fourth absorption unit 524A, the absorption liquid is stored such that the connection position between the first absorption tower body 41 and the lean line 14 is disposed in the stored absorption liquid.

The washing part 60A according to the second embodiment includes a second bottom storage part 63 and a plurality of recovery units 61A. The second bottom storage part 63 stores the washing water. The second bottom storage part 63 stores the washing water having the highest concentration of the component of the absorption liquid in the washing part 60A. In the second bottom storage part 63, the washing water is stored such that the liquid level of the stored washing water is located on the lower side Dvd in the vertical direction Dv with respect to the connection position between the second absorption tower body 42 and the body connection line 43. In the second bottom storage part 63, the washing water is stored such that the connection position between the second absorption tower body 42 and the washing water discharge line 14' is disposed in the stored washing water.

The plurality of recovery units 61A are disposed in the second absorption tower body 42. That is, the plurality of recovery units 61A are arranged at positions spaced from the plurality of absorption units 52A in the horizontal direction. In addition, the plurality of recovery units 61A are disposed side by side in the vertical direction Dv. In addition, the washing part 60A according to the second embodiment includes a first recovery unit 611A and a second recovery unit 612A as the plurality of recovery units 61A. The first recovery unit 611A and the second recovery unit 612A have the same structure.

The first recovery unit 611A is disposed on the upper side Dvu in the vertical direction Dv with respect to the second bottom storage part 63. In the second embodiment, the first recovery unit 611A and the second recovery unit 612A are disposed side by side in this order toward the upper side Dvu in the vertical direction Dv with respect to the second bottom storage part 63.

In the second recovery unit 612A, for example, the washing water is supplied from the washing water supply line 69 connected to the regeneration tower 3. In the second recovery unit 612A, the washing water is stored such that the connection position between the second absorption tower body 42 and the washing water supply line 69 is disposed in the stored washing water.

In addition, the absorption units 52A and the recovery units 61A according to the second embodiment further include a partition plate 59. The partition plate 59 is disposed in at least some of the absorption units 52A and the recovery units 61A. In the second embodiment, the partition plate 59 is disposed in all of the absorption units 52A and the recovery units 61A.

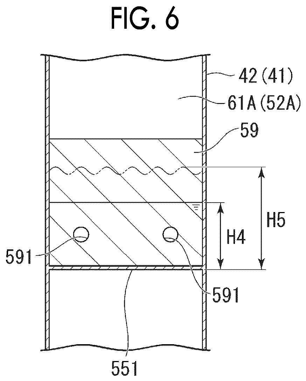

The partition plate 59 partitions the storage part into a plurality of regions arranged in the horizontal direction. The partition plate 59 extends to the upper side Dvu in the vertical direction Dv with respect to the liquid level of the absorption liquid stored in the storage part. The partition plate 59 is a plate-shaped member that extends straight from the bottom plate part 551 to the upper side Dvu in the vertical direction Dv. In the present embodiment, the partition plate 59 divides the storage part into two regions arranged in the horizontal direction. In addition, as shown in FIG. 6, the partition plate 59 includes a communication hole 591 that is open in the liquid stored in the storage part. A plurality of (for example, two in the present embodiment) communication holes 591 are formed. The liquid can move through the communication hole 591 in the plurality of regions.

As shown in FIG. 5, the absorption tower 2A according to the second embodiment includes a first absorption liquid adjustment part 74A, a second absorption liquid adjustment part 75A, a third absorption liquid adjustment part 76A, a fourth absorption liquid adjustment part 77A, a first washing water adjustment part 78A, and a second washing water adjustment part 79A as the plurality of liquid level adjustment parts 70A.

The first absorption liquid adjustment part 74A is connected to the first absorption tower body 41. The first absorption liquid adjustment part 74A separates the gas to be processed from the absorption liquid stored in the first absorption unit 521A. The first absorption liquid adjustment part 74A supplies the separated gas to be processed to the space on the upper side Dvu in the vertical direction Dv with respect to the absorption liquid storage part 55 of the first absorption unit 521A. The first absorption liquid adjustment part 74A supplies the separated absorption liquid to the absorption liquid stored in the first bottom storage part 531 to merge with the absorption liquid.

The second absorption liquid adjustment part 75A is connected to the first absorption tower body 41. The second absorption liquid adjustment part 75A separates the gas to be processed from the absorption liquid stored in the second absorption unit 522A. The second absorption liquid adjustment part 75A supplies the separated gas to be processed to the space on the upper side Dvu in the vertical direction Dv with respect to the absorption liquid storage part 55 of the second absorption unit 522A. The second absorption liquid adjustment part 75A supplies the separated absorption liquid to the absorption liquid stored in the absorption liquid storage part 55 of the first absorption unit 521A to merge with the absorption liquid.

The third absorption liquid adjustment part 76A is connected to the first absorption tower body 41. The third absorption liquid adjustment part 76A separates the gas to be processed from the absorption liquid stored in the third absorption unit 523A. The third absorption liquid adjustment part 76A supplies the separated gas to be processed to the space on the upper side Dvu in the vertical direction Dv with respect to the absorption liquid storage part 55 of the third absorption unit 523A. The third absorption liquid adjustment part 76A supplies the separated absorption liquid to the absorption liquid stored in the absorption liquid storage part 55 of the second absorption unit 522A to merge with the absorption liquid.

The fourth absorption liquid adjustment part 77A is connected to the first absorption tower body 41. The fourth absorption liquid adjustment part 77A separates the gas to be processed from the absorption liquid stored in the fourth absorption unit 524A. The fourth absorption liquid adjustment part 77A supplies the separated gas to be processed to the space on the upper side Dvu in the vertical direction Dv with respect to the absorption liquid storage part 55 of the fourth absorption unit 524A. The fourth absorption liquid adjustment part 77A supplies the separated absorption liquid to the absorption liquid stored in the absorption liquid storage part 55 of the third absorption unit 523A to merge with the absorption liquid.

The first washing water adjustment part 78A is connected to the second absorption tower body 42. The first washing water adjustment part 78A separates the decarbonated gas from the washing water stored in the first recovery unit 611A. The first washing water adjustment part 78A supplies the separated decarbonated gas to the space on the upper side Dvu in the vertical direction Dv with respect to the washing water storage part 65 of the first recovery unit 611A. The first washing water adjustment part 78A supplies the separated washing water to the washing water stored in the second bottom storage part 63 to merge with the washing water.

The second washing water adjustment part 79A is connected to the second absorption tower body 42. The second washing water adjustment part 79A separates the decarbonated gas from the washing water stored in the second recovery unit 612A. The second washing water adjustment part 79A supplies the separated decarbonated gas to the space on the upper side Dvu in the vertical direction Dv with respect to the washing water storage part 65 of the second recovery unit 612A. The second washing water adjustment part 79A supplies the separated washing water to the washing water stored in the washing water storage part 65 of the first recovery unit 611A to merge with the washing water.

A first demister 81A according to the second embodiment allows the gas to be processed after the contact with the absorption liquid to flow through the first absorption tower body 41. The first demister 81A is disposed above in the vertical direction Dv with respect to the fourth absorption unit 524A. The first demister 81A is disposed on the lower side Dvd in the vertical direction Dv with respect to the connection position between the first absorption tower body 41 and the body connection line 43.

A second demister 82A according to the second embodiment allows the decarbonated gas after the contact with the washing water to flow through the second absorption tower body 42. The second demister 82A is disposed on the upper side Dvu in the vertical direction Dv with respect to the second recovery unit 612A. The second demister 82A is disposed on the lower side Dvd in the vertical direction Dv with respect to the connection position between the absorption tower discharge line 12 and the second absorption tower body 42.

The cooling part 90 according to the second embodiment is disposed in each of the first absorption tower body 41 and the second absorption tower body 42. That is, the absorption tower 2A according to the second embodiment includes two cooling parts 90. Specifically, the absorption tower 2A according to the second embodiment includes a first cooling part 90A and a second cooling part 90B.

The first cooling part 90A is disposed in the first absorption tower body 41. The first cooling part 90A includes a first cooling line 91A, a first cooling pump 92A, and a first cooler 93A. The first cooling line 91A is connected to the overflow line 72 of the fourth absorption liquid adjustment part 77A. The first cooling line 91A supplies a part of the absorption liquid flowing through the overflow line 72 to the space on the upper side Dvu in the vertical direction Dv with respect to the absorption liquid storage part 55 of the fourth absorption unit 524A.

The first cooling pump 92A is installed between a cooling water extraction line 94A and the first cooling line 91A and pumps the flowing absorption liquid. The first cooler 93A is disposed in the middle of the first cooling line 91A and cools the absorption liquid pumped by the first cooling pump 92A. Specifically, the first cooler 93A performs heat exchange between the cooling water supplied from the outside and the absorption liquid flowing through the first cooling line 91A to cool the absorption liquid.

The second cooling part 90B is disposed in the second absorption tower body 42. The second cooling part 90B includes a second cooling line 91B, a second cooling pump 92B, and a second cooler 93B. The second cooling line 91B is connected to the overflow line 72 of the second washing water adjustment part 79A. The second cooling line 91B supplies a part of the washing water flowing through the overflow line 72 to the space on the upper side Dvu in the vertical direction Dv with respect to the washing water storage part 65 of the second recovery unit 612A.

The second cooling pump 92B is installed between a cooling water extraction line 94B and the second cooling line 91B and pumps the flowing washing water. The second cooler 93B is disposed in the middle of the second cooling line 91B and cools the washing water pumped by the second cooling pump 92B. Specifically, the second cooler 93B performs heat exchange between the cooling water supplied from the outside and the washing water flowing through the second cooling line 91B to cool the washing water.

In the absorption tower 2A according to the second embodiment, the gas to be processed supplied from the gas to be processed line 11 is first supplied to the lower aeration part 53 in the first absorption tower body 41. In the lower aeration part 53, the supplied gas to be processed is sprayed into the absorption liquid stored in the first bottom storage part 531 by the aeration part. As a result, the gas to be processed sprayed into the absorption liquid flows in the absorption liquid toward the lower side Dvd in the vertical direction Dv to form a froth flow. As a result, the gas to be processed and the absorption liquid come into contact with each other to be vigorously mixed, and the carbon dioxide contained in the gas to be processed is supplied to the absorption liquid. The absorption liquid that has absorbed carbon dioxide is sent to the lower liquid level adjustment tank 534 through the lower gas-liquid separation line 533. The absorption liquid sent to the lower liquid level adjustment tank 534 is the rich liquid, and is temporarily stored and then sent to the rich line 13. In addition, the supplied gas to be processed moves to the upper side Dvu in the vertical direction Dv and is sent to the plurality of absorption units 52A.

Thereafter, the gas to be processed flows through the first absorption unit 521A, the second absorption unit 522A, the third absorption unit 523A, and the fourth absorption unit 524A in this order, as in the first embodiment.

The gas to be processed supplied to the first absorption unit 521A is sprayed into the absorption liquid and comes into contact with the absorption liquid. The absorption liquid that has absorbed carbon dioxide is sent to the first bottom storage part 531 through the first absorption liquid adjustment part 74A. In addition, the gas to be processed that has exited through the absorption liquid moves in the space of the absorption liquid on the upper side Dvu toward the upper side Dvu in the vertical direction Dv and is sent to the second absorption unit 522A.

The gas to be processed supplied to the second absorption unit 522A is sprayed into the absorption liquid and comes into contact with the absorption liquid. The absorption liquid that has absorbed carbon dioxide is sent to the absorption liquid storage part 55 of the first absorption unit 521A through the second absorption liquid adjustment part 75A. In addition, the gas to be processed that has exited through the absorption liquid moves in the space of the absorption liquid on the upper side Dvu toward the upper side Dvu in the vertical direction Dv and is sent to the third absorption unit 523A.

The gas to be processed supplied to the third absorption unit 523A is sprayed into the absorption liquid and comes into contact with the absorption liquid. The absorption liquid that has absorbed carbon dioxide is sent to the absorption liquid storage part 55 of the second absorption unit 522A through the third absorption liquid adjustment part 76A. In addition, the gas to be processed that has exited through the absorption liquid moves in the space of the absorption liquid on the upper side Dvu toward the upper side Dvu in the vertical direction Dv and is sent to the fourth absorption unit 524A.

In the fourth absorption unit 524A, the gas to be processed flows in the same manner as in the other absorption unit 52A. In this case, in the absorption liquid storage part 55 of the fourth absorption unit 524A, the lean liquid supplied through the lean line 14 merges with the stored absorption liquid. In the fourth absorption unit 524A as well, the gas to be processed and the absorption liquid come into contact with each other. The absorption liquid that has absorbed carbon dioxide is sent to the absorption liquid storage part 55 of the third absorption unit 523A through the fourth absorption liquid adjustment part 77A. In addition, the gas to be processed that has exited through the absorption liquid becomes a decarbonated gas and moves in the space of the absorption liquid on the upper side Dvu toward the upper side Dvu in the vertical direction Dv and is sent to the first demister 81A. The mist contained in the decarbonated gas is removed by passing through the first demister 81A. The decarbonated gas from which the mist has been removed is sent to the body connection line 43. The decarbonated gas exits through the first absorption tower body 41 to flow into the second absorption tower body 42 through the body connection line 43.

As described above, in the carbon dioxide absorption part 50A of the present embodiment, the carbon dioxide in the gas to be processed is absorbed in the absorption liquid over five stages of the lower aeration part 53, the first absorption unit 521A, the second absorption unit 522A, the third absorption unit 523A, and the fourth absorption unit 524A. As a result, most of the carbon dioxide contained in the gas to be processed is removed, and the decarbonated gas is obtained. The decarbonated gas flows toward the upper side Dvu in the vertical direction Dv and passes through the first demister 81A to remove the mist contained in the decarbonated gas. The decarbonated gas from which the mist has been removed is sent to the washing part 60A.

In the second absorption tower body 42, the decarbonated gas is sent to above the second bottom storage part 63.

The second bottom storage part 63 stores the washing water. The second bottom storage part 63 stores the washing water having the highest concentration of the absorption liquid in the second absorption tower body 42. In the second bottom storage part 63, the washing water is stored such that the liquid level of the stored washing water is located on the lower side Dvd in the vertical direction Dv with respect to the connection position between the second absorption tower body 42 and the washing water discharge line 14'.

The washing water that has recovered the mist of the absorption liquid is sent to the washing water discharge line 14'. Thereafter, the washing water discharge line 14' merges with the lean liquid supplied from the regeneration tower 3 (not shown) and is sent to the absorption liquid storage part 55 of the fourth absorption unit 524A by the lean line 14. In addition, the supplied decarbonated gas moves to the upper side Dvu in the vertical direction Dv and is sent to the plurality of recovery units 61A.

Thereafter, the decarbonated gas flows through the first recovery unit 611A and the second recovery unit 612A in this order, as in the first embodiment. The decarbonated gas that has exited through the washing water through the second recovery unit 612A moves in the space of the washing water on the upper side Dvu toward the upper side Dvu in the vertical direction Dv and is sent to the second demister 82A. As a result, the absorption liquid entrained in the decarbonated gas is removed, and the absorption tower discharge gas is obtained. The absorption tower discharge gas flows toward the upper side Dvu in the vertical direction Dv and passes through the second demister 82A to further remove the mist contained in the absorption tower discharge gas. The absorption tower discharge gas from which the mist has been removed is discharged from the absorption tower discharge line 12 to the outside of the second absorption tower body 42.

### (Operations and Effects)

In such an absorption tower 2A, the carbon dioxide absorption part 50A includes the plurality of absorption units 52A arranged in the vertical direction Dv in the first absorption tower body 41. The washing part 60A includes the plurality of recovery units 61A arranged in the vertical direction Dv in the second absorption tower body 42 disposed to be spaced from the first absorption tower body 41 in the horizontal direction. That is, the carbon dioxide absorption part 50A and the washing part 60A are disposed side by side in the horizontal direction rather than the vertical direction Dv. In addition, the position of the top portion of the second absorption tower body 42 is disposed not to protrude to the upper side Dvu in the vertical direction Dv with respect to the position of the top portion of the first absorption tower body 41. As a result, the height of the entire absorption tower 2A can be suppressed significantly more than that of the absorption tower 2 of the first embodiment while maintaining the recovery efficiency of carbon dioxide from the gas and the recovery efficiency of the absorption liquid contained in the decarbonated gas after the carbon dioxide has been recovered equivalent to those of the absorption tower having the height in the related art.

In addition, in the carbon dioxide absorption part 50A, the lower aeration part 53 is provided in a stage before the plurality of absorption units 52A (upstream position in the flow direction of the gas to be processed). The gas to be processed is sprayed into the stored absorption liquid by the lower aeration part 53. In particular, in the present embodiment, the gas to be processed is sprayed into the absorption liquid to form a froth flow. Therefore, the absorption liquid and the gas to be processed come into contact with each other more efficiently, and the absorption reaction of carbon dioxide by the absorption liquid is further promoted. Therefore, a large amount of carbon dioxide from the gas to be processed can be recovered before the gas to be processed is supplied to the plurality of absorption units 52A. As a result, the recovery efficiency of carbon dioxide from the gas to be processed can be further improved.

In addition, the partition plate 59 is disposed in the absorption liquid storage part 55 and the washing water storage part 65. The partition plate 59 partitions the absorption liquid storage part 55 and the washing water storage part 65 into a plurality of regions arranged in the horizontal direction. Therefore, the region in which the liquid is stored in the absorption liquid storage part 55 and the washing water storage part 65 is divided. As a result, for example, even in a case where the liquid level undulates due to unstable flow of the storage part (fluctuation of the stored liquid) assumed in a case where the flow rate distribution in the aeration pipe 532 is not uniform, the amount of displacement of the liquid level in the vertical direction Dv can be suppressed. Further, by forming the communication hole 591 in the partition plate 59, the liquid stored in each region can freely move between the regions. Therefore, the amount of liquid stored in each region is different, and the difference in the height of the liquid level can be suppressed. As a result, the height of the liquid level of the liquid stored in the absorption liquid storage part 55 and the washing water storage part 65 can be maintained at a constant position, and the displacement of the liquid level in the vertical direction Dv can be suppressed.

Further, in addition to the second cooling part 90B that cools the washing water present in the second recovery unit 612A, the first cooling part 90A that cools the absorption liquid present in the fourth absorption unit 524A is disposed. The absorption liquid can be effectively cooled by being cooled in the fourth absorption unit 524A located closest to the upper side Dvu in the vertical direction Dv among the plurality of absorption units 52A. In addition, the first cooling part 90A is disposed in the first absorption tower body 41, and the second cooling part 90B is disposed in the second absorption tower body 42. The vapor pressure of the amine in the absorption liquid increases due to the increase in the temperature of the absorption liquid, so that the absorption liquid component in the decarbonated gas increases. By performing cooling in the fourth absorption unit 524A, the temperature rise of the absorption liquid in the first absorption tower body 41 can be suppressed, and the absorption efficiency can be improved. In addition, by performing cooling in the second recovery unit 612A, the absorption liquid component from the second absorption tower body 42 can be suppressed. In this way, since each tower body is cooled, the absorption efficiency in the first absorption tower body 41 can be improved, and the absorption liquid component in the second absorption tower body 42 can be suppressed.

### (Other Embodiments)

The embodiments of the present disclosure have been described in detail above with reference to the drawings. However, the specific configuration is not limited to the embodiments, but includes design changes and the like without departing from the gist of the present disclosure.

The number of absorption units 52 and 52A and recovery units 61 and 61A to be disposed is not limited to the number of embodiments. For example, two absorption units 52 and 52A or four or more absorption units 52 and 52A may be disposed instead of three absorption units 52 and 52A. Similarly, three or more recovery units 61 and 61A may be disposed. That is, in the absorption tower 2 of the first embodiment, two or less or four or more absorption units 52 may be disposed, and in the absorption tower 2A of the second embodiment, three or less or five or more absorption units 52A may be disposed. In addition, in the absorption towers 2 and 2A of the first embodiment and the second embodiment, one recovery unit 61 or 61A or three or more recovery units 61 and 61A may be disposed. In addition, the plurality of absorption units 52 and 52A and recovery units 61 and 61A are not limited to having the same structure. The plurality of absorption units 52 and 52A and recovery units 61 and 61A may have different structures as long as the gas can be sprayed into the liquid.

In addition, the configurations of the gas to be processed aeration part 57 and the decarbonated gas aeration part 67 are not limited to the configurations of the above-described embodiments. That is, the gas to be processed aeration part 57 and the decarbonated gas aeration part 67 are not limited to the structure including the discharging hole 571, the direction changing part 572, and the spray hole 573. In addition, the gas to be processed aeration part 57 and the decarbonated gas aeration part 67 are not limited to having the same structure. The gas to be processed aeration part 57 and the decarbonated gas aeration part 67 may have different structures and different disposition depending on the disposed stage. In addition, the structures of the discharging hole 571, the direction changing part 572, and the spray hole 573 are not limited to the structures of the above-described embodiments.

In addition, the liquid level adjustment parts 70 and 70A are not limited to the disposition as in the first embodiment or the second embodiment. The liquid level adjustment parts 70 and 70A may have different structures and different disposition depending on the disposed stage.

In addition, the cooling part 90 is not limited to the disposition as in the first embodiment or the second embodiment. The cooling part 90 may be disposed in another stage. In addition, the cooling part 90 may be disposed for each of the plurality of liquid level adjustment parts 70 and 70A. The first cooling part 90A that cools the absorption liquid, which is disclosed in the second embodiment, may be applied to the first embodiment.

In addition, the lower aeration part 53 of the second embodiment may be disposed as an alternative to the lower storage part 51 of the first embodiment. In addition, the lower storage part 51 of the first embodiment may be disposed as an alternative to the lower aeration part 53 of the second embodiment.

In addition, the partition plate 59 is not limited to the structure that partitions the storage part into two regions as in the present embodiment. The partition plate 59 may partition the storage part into two or more regions. That is, a plurality of the partition plates 59 may be disposed for one storage part. The partition plate 59 may be disposed in only some of the plurality of stages of absorption units or recovery units. The partition plate 59 of the second embodiment may be disposed in the first embodiment.

### <Supplementary Notes>

The absorption towers 2 and 2A and the carbon dioxide recovery systems 1 and 1A described in the embodiments are understood as follows, for example.
(1) An absorption tower 2, 2A according to a first aspect includes a carbon dioxide absorption part 50, 50A that brings a gas to be processed containing carbon dioxide into contact with an absorption liquid to absorb the carbon dioxide into the absorption liquid, and a washing part 60, 60A that brings a decarbonated gas after contact with the absorption liquid at the carbon dioxide absorption part 50, 50A into contact with washing water to recover an absorption liquid component entrained in the decarbonated gas, in which the carbon dioxide absorption part 50, 50A has an absorption unit 52, 52A and causes the absorption unit 52, 52A to absorb the carbon dioxide from the gas to be processed, the washing part 60, 60A has a recovery unit 61, 61A and causes the recovery unit 61, 61A to recover the absorption liquid component entrained in the decarbonated gas, and at least a part of the absorption unit 52, 52A and the recovery unit 61, 61A has a storage part that stores a liquid and an aeration part that sprays a gas into the liquid stored in the storage part.

According to such a configuration, the gas to be processed is sprayed into the absorption liquid stored in the absorption units 52 and 52A. Therefore, the stored absorption liquid and the gas to be processed can be efficiently brought into contact with each other. As a result, the absorption reaction of carbon dioxide by the absorption liquid is promoted. As a result, even in a case where the height of the storage part in which the absorption liquid is stored or the height of the space on the upper side Dvu with respect to the absorption liquid is suppressed in the absorption units 52 and 52A, the recovery efficiency of carbon dioxide from the gas to be processed can be improved.

Further, the decarbonated gas after passing through the carbon dioxide absorption parts 50 and 50A is sprayed into the washing water stored in the recovery units 61 and 61A. Therefore, the stored washing water and the decarbonated gas can be efficiently brought into contact with each other. As a result, the recovery of the absorption liquid component by the washing water is promoted. As a result, even in a case where the height of the storage part in which the washing water is stored or the height of the space on the upper side Dvu with respect to the washing water is suppressed in the recovery units 61 and 61A, the recovery efficiency of the absorption liquid component from the gas to be processed can be improved.

As a result, the height of the absorption towers 2 and 2A can be suppressed while maintaining the recovery efficiency of carbon dioxide from the gas and the recovery efficiency of the absorption liquid component contained in the decarbonated gas after the carbon dioxide has been recovered.

(2) An absorption tower 2, 2A according to a second aspect is the absorption tower 2, 2A of (1), in which, in the absorption unit 52, 52A, the liquid is the absorption liquid and the gas is the gas to be processed, and in the recovery unit 61, 61A, the liquid is the washing water and the gas is the decarbonated gas that has passed through the carbon dioxide absorption part 50, 50A.

(3) An absorption tower 2, 2A according to a third aspect is the absorption tower 2, 2A of (1) or (2), in which the carbon dioxide absorption part 50, 50A has a plurality of the absorption units 52, 52A disposed side by side in a vertical direction Dv and causes the plurality of absorption units 52, 52A to sequentially absorb the carbon dioxide from the gas to be processed, and the washing part 60, 60A has a plurality of the recovery units 61, 61A disposed side by side in the vertical direction Dv and causes the plurality of recovery units 61, 61A to sequentially recover the absorption liquid component entrained in the decarbonated gas.

(4) An absorption tower 2, 2A according to a fourth aspect is the absorption tower 2, 2A of any one of (1) to (3), in which the aeration part sprays the gas into the liquid in a direction including a component toward a lower side Dvd in a vertical direction Dv, or in a horizontal direction.

According to such a configuration, by spraying the gas into the liquid in the direction including the component toward the lower side Dvd in the vertical direction Dv, or in the horizontal direction, the contact time between the liquid and the gas can be increased as compared with a case where the gas is sprayed toward the upper side Dvu in the vertical direction Dv. That is, the contact time between the gas sprayed without increasing the position of the liquid level of the stored liquid and the liquid is increased. As a result, the recovery efficiency of carbon dioxide from the gas to be processed and the recovery efficiency of the absorption liquid component contained in the decarbonated gas can be further improved. Therefore, the height of the absorption towers 2 and 2A can be further suppressed.

(5) An absorption tower 2, 2A according to a fifth aspect is the absorption tower 2, 2A of any one of (1) to (4), in which the aeration part has a discharging hole 571 that discharges the gas toward an upper side Dvu in a vertical direction Dv, a direction changing part 572 that covers the discharging hole 571 from the upper side Dvu in the vertical direction Dv and directs a flow direction of the gas to a lower side Dvd in the vertical direction Dv, and a spray hole 573 that sprays the gas having flowed through the direction changing part 572 into the liquid.

According to such a configuration, the gas is discharged toward the upper side Dvu in the vertical direction Dv by the discharging hole 571. Therefore, in a case where the absorption units 52 and 52A or the recovery units 61 and 61A are stacked in the vertical direction Dv, the gas can be easily supplied from the absorption units 52 and 52A or the recovery units 61 and 61A located on the lower side Dvd in the vertical direction Dv to other absorption units 52 and 52A or recovery units 61 and 61A located on the upper side Dvu in the vertical direction Dv through the discharging hole 571. The flow direction of the gas supplied from the discharging hole 571 is changed by the direction changing part 572, and the gas is sprayed from the spray hole 573. Therefore, it is possible to spray the gas supplied from the absorption units 52 and 52A or the recovery units 61 and 61A on the lower side Dvd into the stored liquid toward the lower side Dvd in the vertical direction Dv by a simple configuration.

(6) An absorption tower 2, 2A according to a sixth aspect is the absorption tower 2, 2A of any one of (1) to (5), further including: a gas-liquid separation line 71 that connects an inside of the liquid stored in the storage part and a space on the upper side Dvu in the vertical direction Dv with respect to the liquid in the storage part; and an overflow line 72 that is connected to the gas-liquid separation line 71 at the same position as a liquid level of the liquid stored in the storage part when a device is stopped in the vertical direction Dv, and causes the liquid flowing through the gas-liquid separation line 71 to flow toward the lower side Dvd in the vertical direction Dv.

According to such a configuration, in a case where the liquid is about to be stored beyond the connection position between the gas-liquid separation line 71 and the overflow line 72, the stored liquid is sent from the overflow line 72 to the other absorption units 52 and 52A or the storage part of the recovery units 61 and 61A on the lower side Dvd in the vertical direction Dv. Therefore, the position of the liquid level of the liquid stored in the storage part can be maintained without using a complicated device.

(7) An absorption tower 2, 2A according to a seventh aspect is the absorption tower 2, 2A of (6), in which, in the vertical direction Dv, an opening position of the discharging hole 571 is higher than a connection position between the gas-liquid separation line 71 and the overflow line 72, and in the vertical direction Dv, a spray position of the gas by the spray hole 573 is lower than the connection position between the gas-liquid separation line 71 and the overflow line 72.

According to such a configuration, in the vertical direction Dv, the opening position of the discharging hole 571 is higher than the connection position between the gas-liquid separation line 71 and the overflow line 72, and the spray position of the gas by the spray hole 573 is lower than the connection position. The liquid level height, which is the liquid level of the liquid during the operation stop of the absorption towers 2 and 2A, is always at a position lower than the opening position of the discharging hole 571 as the opening position of the discharging hole 571 is higher than the connection position between the gas-liquid separation line and the overflow line 72. Therefore, it is possible to suppress the occurrence of an event in which the gas is not sprayed into the liquid at the start of the operation of the absorption towers 2 and 2A.

(8) An absorption tower 2, 2A according to an eighth aspect is the absorption tower 2, 2A of any one of (1) to (7), in which at least a part of the absorption unit 52, 52A and the recovery unit 61, 61A further includes a partition plate 59 that extends to an upper side Dvu in a vertical direction Dv with respect to a liquid level of the liquid stored in the storage part and that partitions the storage part into a plurality of regions arranged in a horizontal direction, and the partition plate 59 has a communication hole 591 that opens in the liquid stored in the storage part.

According to such a configuration, the region in which the liquid is stored in the storage part is divided. As a result, even in a case where the liquid level undulates due to fluctuation of the stored liquid (unstable flow), the amount of displacement of the liquid level in the vertical direction Dv can be suppressed. Further, by forming the communication hole 591 in the partition plate 59, the liquid stored in each region can freely move between the regions. In a case where the amount of liquid stored in each region is different, a difference in the reaction time between the absorption liquid and the gas to be processed occurs, and an imbalance in the absorption performance of carbon dioxide occurs, but this can be suppressed. As a result, the liquid level of the liquid stored in the storage part can be maintained at a constant position, and the displacement of the liquid level in the vertical direction Dv can be suppressed.

(9) An absorption tower 2, 2A according to a ninth aspect is the absorption tower 2, 2A of any one of (1) to (8), further including: a cooling part 90 that cools the liquid.

According to such a configuration, the liquid is cooled by the cooling part 90, so that the temperature rise can be suppressed. As a result, the decrease in the absorption efficiency and the increase in the absorption liquid component due to the temperature rise of the absorption liquid in the absorption towers 2 and 2A can be suppressed.

(10) An absorption tower 2, 2A according to a tenth aspect is the absorption tower 2, 2A of any one of (1) to (9), in which the carbon dioxide absorption part 50, 50A has a lower aeration part 53 that is disposed on a lower side in a vertical direction Dv with respect to the absorption unit 52, 52A and that stores the absorption liquid and sprays the gas to be processed into the absorption liquid.

According to such a configuration, the carbon dioxide can be further efficiently absorbed by being sprayed into the absorption liquid stored in the first bottom storage part 531.

(11) An absorption tower 2, 2A according to an eleventh aspect is the absorption tower 2, 2A of any one of (1) to (10), in which the carbon dioxide absorption part 50, 50A and the washing part 60, 60A are disposed side by side in a horizontal direction.

According to such a configuration, the height of the entire absorption towers 2 and 2A can be significantly suppressed while maintaining the recovery efficiency of carbon dioxide from the gas and the recovery efficiency of the absorption liquid contained in the decarbonated gas after the carbon dioxide has been recovered.

(12) A carbon dioxide recovery system 1, 1A according to a twelfth aspect includes the absorption tower 2, 2A of any one of (1) to (11), which brings the gas to be processed containing the carbon dioxide into contact with the absorption liquid and discharges the absorption liquid having absorbed the carbon dioxide and an absorption tower discharge gas containing the gas to be processed from which the carbon dioxide has been removed, and a regeneration tower 3 that desorbs the carbon dioxide from the absorption liquid discharged from the absorption tower 2, 2A and discharges the absorption liquid from which the carbon dioxide has been desorbed and a regeneration tower discharge gas containing the carbon dioxide.

(13) A carbon dioxide absorption method according to a thirteenth aspect includes a carbon dioxide absorption step of bringing a gas to be processed containing carbon dioxide into contact with an absorption liquid to absorb the carbon dioxide into the absorption liquid, and a washing step of bringing a decarbonated gas after contact with the absorption liquid in the carbon dioxide absorption step into contact with washing water to recover an absorption liquid component entrained in the decarbonated gas, in which at least a part of the carbon dioxide absorption step and the washing step includes a step of spraying a gas into a stored liquid to generate a froth flow, and a step of sending a part of the stored liquid to a lower side in a vertical direction and extracting a gas contained in the liquid to send the gas to an upper side in the vertical direction.

According to such a step, by making the froth flow, the gas-liquid interface is vigorously disturbed, and the gas and the liquid are mixed with each other, which can promote the movement of carbon dioxide from the gas to be processed to the absorption liquid or the recovery of the absorption liquid component from the decarbonated gas to the washing water. As a result, the carbon dioxide from the gas to be processed or the absorption liquid component contained in the decarbonated gas after the carbon dioxide has been recovered can be efficiently recovered, and the height of the absorption tower can be suppressed.

### Industrial Applicability

According to the present disclosure, it is possible to suppress the height of the absorption tower while maintaining the recovery efficiency of the carbon dioxide from the gas and recovery efficiency of the absorption liquid contained in the gas after the carbon dioxide has been recovered.

### Reference Signs List

1, 1A: carbon dioxide recovery system
2, 2A: absorption tower
11: gas to be processed line
12: absorption tower discharge line
3: regeneration tower
31: reboiler
13: rich line
35: rich pump
14: lean line
14': washing water discharge line
37: lean pump
4: absorption liquid heat exchanger
15: regeneration tower discharge line
40: absorption tower body
50, 50A: carbon dioxide absorption part
51: lower storage part
52, 52A: absorption unit
521, 521A: first absorption unit
522, 522A: second absorption unit
523, 523A: third absorption unit
55: absorption liquid storage part
551: bottom plate part
57: gas to be processed aeration part
571: discharging hole
572: direction changing part
573: spray hole
581: collision plate
582: flow path forming plate
60, 60A: washing part
61, 61A: recovery unit
611, 611A: first recovery unit
612, 612A: second recovery unit
65: washing water storage part
67: decarbonated gas aeration part
69: washing water supply line
70, 70A: liquid level adjustment part
71: gas-liquid separation line
72: overflow line
74, 74A: first absorption liquid adjustment part
75, 75A: second absorption liquid adjustment part
76, 76A: third absorption liquid adjustment part
77A: fourth absorption liquid adjustment part
78, 78A: first washing water adjustment part
79, 79A: second washing water adjustment part
80: demister
81, 81A: first demister
82, 82A: second demister
90: cooling part
91: cooling line
92: cooling pump
93: washing water cooler
94, 94A, 94B: cooling water extraction line
41: first absorption tower body
42: second absorption tower body
43: body connection line
524A: fourth absorption unit
53: lower aeration part
531: first bottom storage part
532: aeration pipe
533: lower gas-liquid separation line
534: lower liquid level adjustment tank
59: partition plate
591: communication hole
63: second bottom storage part
90A: first cooling part
91A: first cooling line
92A: first cooling pump
93A: first cooler
90B: second cooling part
91B: second cooling line
92B: second cooling pump
93B: second cooler
Dv: vertical direction
Dvu: upper side
Dvd: lower side

## Claims

1. An absorption tower comprising:
a carbon dioxide absorption part that brings a gas to be processed containing carbon dioxide into contact with an absorption liquid to absorb the carbon dioxide into the absorption liquid; and
a washing part that brings a decarbonated gas after contact with the absorption liquid at the carbon dioxide absorption part into contact with washing water to recover an absorption liquid component entrained in the decarbonated gas,
wherein the carbon dioxide absorption part has an absorption unit and causes the absorption unit to absorb the carbon dioxide from the gas to be processed,
the washing part has a recovery unit and causes the recovery unit to recover the absorption liquid component entrained in the decarbonated gas, and
at least a part of the absorption unit and the recovery unit has a storage part that stores a liquid and an aeration part that sprays a gas into the liquid stored in the storage part.

2. The absorption tower according to Claim 1,
wherein, in the absorption unit, the liquid is the absorption liquid and the gas is the gas to be processed, and
in the recovery unit, the liquid is the washing water and the gas is the decarbonated gas that has passed through the carbon dioxide absorption part.

3. The absorption tower according to Claim 1 or 2,
wherein the carbon dioxide absorption part has a plurality of the absorption units disposed side by side in a vertical direction and causes the plurality of absorption units to sequentially absorb the carbon dioxide from the gas to be processed, and
the washing part has a plurality of the recovery units disposed side by side in the vertical direction and causes the plurality of recovery units to sequentially recover the absorption liquid component entrained in the decarbonated gas.

4. The absorption tower according to Claim 1 or 2,
wherein the aeration part sprays the gas into the liquid in a direction including a component toward a lower side in a vertical direction, or in a horizontal direction.

5. The absorption tower according to Claim 1 or 2,
wherein the aeration part has
a discharging hole that discharges the gas toward an upper side in a vertical direction,
a direction changing part that covers the discharging hole from the upper side in the vertical direction and directs a flow direction of the gas to a lower side in the vertical direction, and
a spray hole that sprays the gas having flowed through the direction changing part into the liquid.

6. The absorption tower according to Claim 5, further comprising:
a gas-liquid separation line that connects an inside of the liquid stored in the storage part and a space on the upper side in the vertical direction with respect to the liquid in the storage part; and
an overflow line that is connected to the gas-liquid separation line at the same position as a liquid level of the liquid stored in the storage part when a device is stopped in the vertical direction, and causes the liquid flowing through the gas-liquid separation line to flow toward the lower side in the vertical direction.

7. The absorption tower according to Claim 6,
wherein, in the vertical direction, an opening position of the discharging hole is higher than a connection position between the gas-liquid separation line and the overflow line, and
in the vertical direction, a spray position of the gas by the spray hole is lower than the connection position between the gas-liquid separation line and the overflow line.

8. The absorption tower according to Claim 1 or 2,
wherein at least a part of the absorption unit and the recovery unit further includes a partition plate that extends to an upper side in a vertical direction with respect to a liquid level of the liquid stored in the storage part and that partitions the storage part into a plurality of regions arranged in a horizontal direction, and
the partition plate has a communication hole that opens in the liquid stored in the storage part.

9. The absorption tower according to Claim 1 or 2, further comprising:
a cooling part that cools the liquid.

10. The absorption tower according to Claim 1 or 2,
wherein the carbon dioxide absorption part has a lower aeration part that is disposed on a lower side in a vertical direction with respect to the absorption unit and that stores the absorption liquid and sprays the gas to be processed into the absorption liquid.

11. The absorption tower according to Claim 1 or 2,
wherein the carbon dioxide absorption part and the washing part are disposed side by side in a horizontal direction.

12. A carbon dioxide recovery system comprising:
the absorption tower according to Claim 1 or 2, which brings the gas to be processed containing the carbon dioxide into contact with the absorption liquid and discharges the absorption liquid having absorbed the carbon dioxide and an absorption tower discharge gas containing the gas to be processed from which the carbon dioxide has been removed; and
a regeneration tower that desorbs the carbon dioxide from the absorption liquid discharged from the absorption tower and discharges the absorption liquid from which the carbon dioxide has been desorbed and a regeneration tower discharge gas containing the carbon dioxide.

13. A carbon dioxide absorption method comprising:
a carbon dioxide absorption step of bringing a gas to be processed containing carbon dioxide into contact with an absorption liquid to absorb the carbon dioxide into the absorption liquid; and
a washing step of bringing a decarbonated gas after contact with the absorption liquid in the carbon dioxide absorption step into contact with washing water to recover an absorption liquid component entrained in the decarbonated gas,
wherein at least a part of the carbon dioxide absorption step and the washing step includes
a step of spraying a gas into a stored liquid to generate a froth flow, and
a step of sending a part of the stored liquid to a lower side in a vertical direction and extracting a gas contained in the liquid to send the gas to an upper side in the vertical direction.
